# EUROPEAN PATENT APPLICATION

(11) **EP 1 599 044 A1**
(43) Date of publication of application: **23.11.2005**
(21) Application number: 04711466.5
(22) Date of filing: 16.02.2004
(51) Int. Cl.: H04N 7/16

(54) **IMAGE DATA DISTRIBUTION CONTROL METHOD, DEVICE, SYSTEM, AND PROGRAM**

(30) Priority: 21.02.2003 JP 2003044237; 18.11.2003 JP 2003387993
(71) Applicant: NEC CORPORATION, Minato-ku, Tokyo 108-8001 (JP)
(72) Inventor: DEI, H., C/o Nec Corporation, Tokyo 1088001 (JP)
(74) Representative: Sieckmann, Dirk Christoph
(86) International application number: PCT/JP2004/001621
(87) International publication number: WO 2004/075548

(57) **Abstract**

An image data distribution device (101) includes an image coded data 1 transmission unit (105), an image coded data 2 transmission unit (106), and a session management unit (103). A plurality of image coded data of the same image is distributed in different sessions or image data having different types of image frame and image block is distributed in different sessions. Here, for each session, the routing priority control is performed in the transmission path and power control is performed if the path is a radio transmission path. An image data reception device (108) includes an image coded data 1 reception unit (110), an image coded data 2 reception unit (111), a session information reception unit (109), a coded data reconstruction unit (112) for reconstructing the coded data, and a decoder (113). Among the image coded data normally received from at least one session, coded data is selected according to the image quality and decoded.

## Description

### TECHNICAL FIELD

This invention relates to a method, device and system for distributing coded image data, and a computer program that is executed by a computer comprising a distribution device and reception device for image data, and more particularly to a method, device, system and computer program that are suitable for making it possible to reproduce an image with good quality according to the reception environment of moving image data and like by the reception device.

### BACKGROUND ART

In recent years, many methods of transmitting data that has been coded using high efficiency compression based on inter frame prediction have been used as methods for efficiently transmitting moving image data. In these methods, by predicting a coded image from the previous and following frame in time and then coding the prediction parameters and prediction residual image data that are obtained, the amount of information for moving image data having high correlation in the time direction is reduced. Furthermore, by performing high efficiency compression and coding of the prediction residual image data using transform coding and quantization, it is possible to transmit moving image data using little transmission bandwidth.

As a typical example of this, there are methods of using a compression coding method such as MPEG (Moving Picture Experts Group)-1, MPEG-2, MPEG-4 or the like. In these compression coding methods, inter frame prediction using motion compensation is performed for the input image frame for a rectangular area unit having a fixed size called a macro block, and then the obtained motion vectors and the signal data, which was compressed by performing 2-D discrete cosine transformation and quantization of the prediction residual image data, are coded in variable lengths.

There are many methods for distributing this kind of moving image compression coding information to an IP (Internet Protocol) network that uses the packet exchange method, and expansion to the distribution of moving images using a wireless transmission path is feasible.

In the distribution of moving image data, when packet loss occurs due to the traffic conditions of the network, or when wireless transmission error or loss occurs in the wireless transmission path, using a method of sending a request to re-transmit the lost data is typical.

Also, in communication over a wireless transmission path, transmitting/receiving power control is performed according to the wireless reception environment of each individual recipient, making it possible to maintain the quality of data communication and to stabilize the received data.

A system for making it possible to improve the transmission efficiency without a drop in image quality by adaptively switching between the transmission of image information for the low image quality component having a low data rate, and the transmission of image information for the high image quality component having a high data rate is known as a method of transmitting image information having differing image quality (see patent document 1). Moreover, a device is known that makes it possible to transmit high quality video data and prevent the video from stopping by preparing video data (1) to (3) having a plurality of differing video rates in the video transmission device on the transmission side as a plurality of video data having differing rates, and by having the video reception device send a rate switch request signal to the video transmission device to switch the video data (1) to (3) (see patent document 2). Furthermore, construction of a reception device is also known in which a data reconstruction means inside the reception device selects normal block data from a plurality of block data (a plurality of block data is sent from the transmission device for the same portion in the image frame) that is received for the same portion in the image frame and reconstructs that image frame, and an image decoding means decodes the reconstructed image frame (see patent document 3). When describing RTP header information and the like later on, non-patent document 1 below will be referenced.

### Patent Document 1

Japanese Patent Kokai Publication No. JP-A-10-294941 (Pgs. 5 - 6, Fig. 1)

### Patent Document 2

Japanese Patent Kokai Publication No. JP-A-11-187367 (Pgs. 3 - 4, Fig. 1)

### Patent Document 3

Japanese Patent Kokai Publication No. JP-A-10-224746 (Pgs. 4 - 6, Fig. 1)

### Non-patent Document 1

Schulzrinne, H., Casner, S., Frederick, R., and V. Jacobson, "RTP: A Transport Protocol for Real Time Applications", RFC 1889, January 1996, 5.1 RTP Fixed Header Fields. Internet [obtained from URL//www.ietf.org/tfc.html; ftp://ftp.rfc-editor.org/in-notes/rfc1889.txt]

### DISCLOSURE OF THE INVENTION

However, in the prior methods of using a re-transmission request to supplement data loss when packet loss occurs, the re-transmission request information and re-transmitted data cause the traffic on the network to increase even further. Therefore, this does not become a substantial solution when packets are lost due to congested traffic. Moreover, complicated processing is required in order to control the power of the wireless transmission path of each recipient.

Furthermore, there are cases in which packet loss occurs even though a method for performing re-transmission control or power control of the wireless transmission path of each recipient is employed. As a countermeasure performed on the receiving side against packet loss, there is an error concealment method that generates image data from the images of the previous and following frames in time that were decoded correctly, or from surrounding image data in the same frame such that errors are concealed as much as possible. However, even in this error concealment method it is not possible to remove disturbance in the decoded image. Also, since inter frame prediction is used, there is a problem in that disturbance in an image that has once been generated also propagates to the following frames.

Taking the aforementioned circumstances into consideration, it is a first object of the present invention to provide a method, device, system and computer program that make it possible in the distribution of moving images to optimize the quality of distributed images according to the reception environment of the recipient, while at the same time keeping increase of traffic to a minimum.

Also, it is a second object of the present invention to provide a method, device, system and computer program that, in order to improve the reliability of the image distribution method, makes it possible to suppress disturbance in an image when packet loss occurs by receiving image data from at least one or more session, and then selecting and decoding data according to the image quality.

Moreover, another object of the present invention is to provide a method, device, system and computer program that, in order to accomplish the first and second objects described above, makes it possible to suppress at least the amount of processing that is added to both the sender and recipient.

Furthermore, another object of the present invention is to provide a method, device, system and computer program for accomplishing the aforementioned first and second object without sending feedback from the receiving side to the transmitting side.

Yet another object of the present invention is to provide a method, device, system and computer program that, while accomplishing the aforementioned first and second object, makes it possible to suppress increase of the consumption power required by the reception device.

A device related to one aspect of the present invention that accomplishes at least one of the aforementioned objects comprises: means for selecting a session for distributing coded image data according to the image quality when distributing a plurality of coded image data for the same image; and means for distributing coded image data in the selected session, (i.e.,) which may be a physical session of transmission path or radio frequency band, or a logical connection session. In this invention, construction is also possible in which there is a time difference when distributing a plurality of coded image data for the same image.

In this invention, the aforementioned device can also be constructed such that it comprises: means for selecting a session for distributing coded image data according to the image quality when distributing a plurality of coded image data for the same image; and means for performing routing priority control for the transmission path, and/or power control for a wireless transmission path for each session selected according to the image quality.

A device related to another aspect of the invention comprises: means for selecting a session for distributing coded image data based on the type of image frame and/or image block when distributing coded image data; and means for distributing coded image data in the selected session.

In this invention, the aforementioned device can also be constructed such that it comprises: means for selecting a session for distributing coded image data based on the type of image frame and/or image block when distributing coded image data; and means for performing routing priority control for the transmission path, and/or power control for a wireless transmission path for each session selected according to the image quality.

A device related to another aspect of the invention comprises: means for selecting a plurality of sessions for distributing coded image data when distributing coded image data; and means for distributing coded image data in the selected sessions.

In this invention, the aforementioned device can also be constructed such that it comprises: means for selecting a session for distributing coded image data; and means for performing routing priority control for the transmission path, and/or power control for a wireless transmission path for each session selected according to the image quality.

In this invention, the plurality of coded image data for the same image is coded using the same coding method and has the same frame configuration, and the transmission unit for each is data in which the same position in the same frame is coded.

A device related to another aspect of the invention comprises: means for receiving at least one coded moving image data that is distributed from an image data distribution device; means for selecting data from properly received coded data based on the image quality, and means for decoding the selected data.

A device related to another aspect of the invention comprises: means for receiving at least one coded moving image data that is distributed from an image data distribution device; means for selecting whether or not to receive at least one coded moving image data based on at least one of the error/loss ratio of received data, the usable power, and a pre-determined setting; means for selecting data from properly received coded data based on the image quality, and means for decoding the selected data.

A method related to another aspect of the invention is a control method of controlling distribution of image data from an image data distribution device to an image data reception device, and the control method comprises:
a step in which the image data distribution device selects a session for distributing coded image data based on the image quality when distributing a plurality of coded image data for the same image; and
a step of distributing coded image data in the selected session.

A method related to another aspect of the invention comprises:
a step in which the image data distribution device selects a session for distributing coded image data based on the image quality when distributing a plurality of coded image data for the same image; and
a step in which the image data distribution device performs routing priority control for the transmission path, and/or power control for a wireless transmission path for each session selected according to the image quality.

A method related to another aspect of the invention is a control method for distributing image data from an image data distribution device to an image data reception device, and the method comprises:
a step in which the image data distribution device selects a session for distributing coded image data based on the type of image frame and/or image block when distributing coded image data; and
a step of distributing coded image data in the selected session.

A method related to another aspect of the invention comprises:
a step in which the image data distribution device selects a session for distributing coded image data based on the type of image frame and/or image block when distributing coded image data; and
a step of performing routing priority control for the transmission path or power control for a wireless transmission path for each session selected according to the image quality.

A method related to another aspect of the invention comprises:
a step in which the image data reception device receives at least one coded moving image data that is distributed from the image data distribution device;
a step in which the image data reception device selects data from among properly received coded data based on the image quality; and
a step of decoding the selected data.

A method related to another aspect of the invention comprises:
a step in which the image data reception device receives at least one coded moving image data that is distributed from the image data distribution device;
a step of selecting whether or not to receive at least one image data based on at least one of the error/loss ratio of received data, the usable power, and a pre-determined setting;
a step in which the image data reception device selects data from among properly received coded data based on the image quality; and
a step of decoding the selected data.

In a system related to the present invention, the image data distribution device comprises: means for distributing a plurality of moving image data for the same image in a different session for each; and means for setting routing priority control for the transmission path, or power control for a wireless transmission path for each session for distributing moving image data. The image data reception device comprises: means for receiving data distributed in at least one session; means for selecting data from among received moving image data based on the image quality, and reconstructing that data into single moving image data; and means for decoding the reconstructed data.

In a system related to the present invention, the image data distribution device comprises: means for distributing a plurality of moving image data for the same image in a different session for each; and means for setting routing priority control for the transmission path, or power control for a wireless transmission path for each session for distributing moving image data. The image data reception device comprises: means for receiving data distributed in at least one session; means for selecting whether or not to receive at least one session based on at least one of the error/loss ratio of received data, the usable power, and a pre-determined setting; means for selecting data from among received moving image data based on the image quality, and reconstructing that data into single moving image data; and means for decoding the reconstructed data.

In a system related to this invention, the image data distribution device comprises: means for distributing coded moving image data and coded data, which is data for at least part of a frame of coded moving image data that has been coded into intra-macro-blocks, each in a different session; and means for setting routing priority control for the transmission path, and/or power control for a wireless transmission path for each session for distributing moving image data.

In a system related to this invention, the image data distribution device comprises: means for distributing I pictures and other pictures from among I (Intra) pictures, P (Predictive) pictures, and when existing in the coding method using coded moving images, B (Bi-directionally-predictive) pictures of moving image data, each in different sessions; and means for setting routing priority control for the transmission path, or power control for a wireless transmission path for each session for distributing moving image data. The image data reception device comprises: means for receiving data distributed in at least one session; means for reconstructing received moving image data into single moving image data; and means for decoding the reconstructed data.

In a system related to the present invention, the image data distribution device comprises: means for distributing I/P pictures and other pictures from among I pictures, P pictures and B pictures of moving image data, each in a different session; and means for setting routing priority control for the transmission path, or power control for a wireless transmission path for each session for distributing moving image data.

In a system related to the present invention, the image data distribution device comprises: means for distributing I pictures, P pictures and B pictures from among I pictures, P pictures and B pictures of moving image data, each in a different session; and means for setting routing priority control for the transmission path, or power control for a wireless transmission path for each session for distributing moving image data.

In a system related to the present invention, the image data distribution device comprises: means for distributing I pictures, P pictures, and when existing in the coding method using coded moving images, B pictures and coded data, which is data for at least part of a frame of coded moving image data that has been coded into intra-macro-blocks (Intra MB), each in a different session; and means for setting routing priority control for the transmission path, or power control for a wireless transmission path for each session for distributing moving image data.

With this invention it is possible to optimize distributed images according to the reception environment of the recipient (receiver), while at the same time keeping an increase in network traffic to a minimum.

Also, with this invention, distribution that has resistance to data errors or loss in the transmission path becomes possible, and thus it is possible to improve the reliability of distribution of moving images.

Moreover, with this invention, since it is possible to obtain the two aforementioned effects, it is possible to keep any increase of the amount of processing required by both the sender and recipient to a minimum.

With this invention, it is possible to obtain the two aforementioned effects without having to send feedback information from the receiving side to the transmitting side.

Also, with this invention, since it is possible to obtain the two aforementioned effects, it is possible to keep any increase in consumption power required by the reception device to a minimum.

### BRIEF DESCRIPTION OF THE DRAWINGS

Fig. 1 is a drawing showing an example of a first embodiment of the invention.
Fig. 2 is a drawing showing an example of a second embodiment of the invention.
Fig. 3 is a drawing showing an example of a third embodiment of the invention.
Fig. 4 is a drawing showing an example of a fourth embodiment of the invention.
Fig. 5 is a drawing showing an example of a fifth embodiment of the invention.
Fig. 6 is a drawing showing an example of a sixth embodiment of the invention.
Fig. 7 is a drawing showing an example of a seventh embodiment of the invention.
Fig. 8 is a drawing showing an example of an eighth embodiment of the invention.
Fig. 9 is a drawing showing an example of a ninth embodiment of the invention.
Fig. 10 is a drawing showing an example of a tenth embodiment of the invention.
Fig. 11 is a drawing showing an example of an eleventh embodiment of the invention.
Fig. 12 is a drawing showing an example of a twelfth embodiment of the invention.

### PREFERRED EMBODIMENTS FOR CARRYING OUT THE INVENTION

The preferred embodiments of the present invention will be explained below.

### [First Embodiment]

In a first embodiment of the invention, an image data distribution device comprises: means for distributing a plurality of moving mage data (for example, moving image data having differing degrees of image quality) for the same image in different sessions; and means for setting routing priority control for the transmission path, or power control for a wireless transmission path for each session for distributing the moving image data. An image data reception device comprises: means for receiving data distributed in at least one session, and means for selecting data from among the received moving image data based on image quality, and then reconstructing and decoding that data into single moving image data.

Furthermore, in the first embodiment of the invention, the image data reception device can also be constructed such that it comprises means for selecting whether or not to receive at least one session based on at least one of the error/loss ratio of received data, the usable power of the reception device, and a pre-determined setting.

### [Example 1]

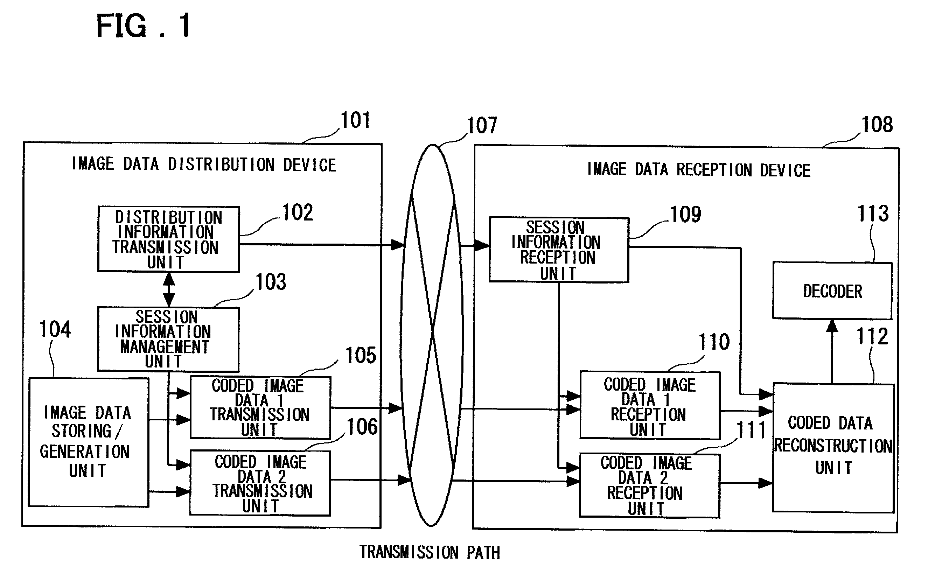

The first example of the present invention will be explained with reference to the drawings. Fig. 1 shows the construction of this first example of the invention. As shown in Fig. 1, this example comprises: an image data distribution device 101 that distributes coded image data, an image data reception device 108, and a transmission path 107 for transmitting the coded image data. In this example, the image data distribution device 101 is connected to the transmission path 107, which is an IP (Internet Protocol) network, and it uses UDP (User Datagram Protocol)/IP to distribute the coded image data. The image data reception device 108 is presumed to be a client terminal that is connected to the IP network. In this example, in order to simplify the explanation, the number of image data to be distributed will be explained as being two, however, of course, in this invention, the number of image data to be distributed is not limited to two.

The image data distribution device 101 comprises: a distribution information transmission unit 102, a session information management unit 103, image data storing/generation unit 104, coded image data 1 transmission unit 105 and coded image data 2 transmission unit 106.

The image data reception device 108 comprises: a session information reception unit 109, coded image data 1 reception unit 110, coded image data 2 reception unit 111, coded data reconstruction unit 112 and a decoder 113. Below, the operation of the image data distribution device 101 and image data reception device 108 will be explained in that order.

In the image data distribution device 101, image data, which was
- stored (accumulated) in advance,
- coded and generated in real time, or
- converted and generated in real time from existing image data by the image data storing/generation unit 104, is sent by the coded image data 1 transmission unit 205 and coded image data 2 transmission unit 206 via the transmission path 107 based on routing priority information for the transmission path 107 and/or power control information for a wireless transmission path for each session set by the session information management unit 103. Priority routing makes it possible to prioritize then send/receive certain application data by specifying a certain protocol and port number, and in this example and each of the following examples, any well known means can be used to accomplish this.

The session information management unit 103 manages information related to the image quality (compression rate) of coded image data 1 and coded image data 2, and notifies the image data reception device 108 of that information from the distribution information transmission unit 102.

When a plurality of overlapping image data is received by the image data reception device 108, the coded image data 1 transmission unit 105 and the coded image data 2 transmission unit 106 have a function for adding the appropriate information (for example an RTP (Real Time Transport Protocol) header) to the RTP so that data can be selected and so that data can be properly rearranged in the case that the order in which the data is received is changed. Details about the RTP header can be found in the aforementioned non-patent document 1. The transmission unit for both the coded image data 1 and coded image data 2 is coded data for the same position in the same frame of the same image to which the RTP sequence numbers are given; and in order to indicate which coded image data the data is, it is also possible to add the payload type and/or SSRC (Synchronization Source identifier) and/or CSRC (Contributing Source identifier).

Also, during transmission, when coded image data 2 is sent having a time difference with respect to coded image data 1 that is longer than the data error or burst length of loss in the transmission path 107, for example, the possibility for each of the coded image data to receive the effect of error or loss in the transmission path is reduced; and when the image data reception device 108 comprises a reception buffer that is greater than the time difference, it is possible to distribute more stable image data. At this time, by setting the image quality of both coded image data 1 and coded image data 2 to the be the same, or by sending coded image data 1 from both the coded image data 1 transmission unit 105 and coded image data 2 transmission unit 106, then when error occurs in the transmission path or when there is the effect of lost data, it is possible to keep any deterioration of the reproduced image quality in the image data reception device 108 to a minimum.

This example can also be constructed such that the session information management unit 103 manages the time difference (time gap) between the transmission of a plurality of coded image data of the same image, and notifies the image data reception device 108 by way of the distribution information transmission unit 102 of that time difference, or can also be constructed such that the time difference between transmission is set in advance between the image data distribution device 101 and image data reception device 108, and that the image data reception device 108 sets the reception buffer amount based on that time difference.

In the image data reception device 108, the session information reception unit 109 receives information from the image data distribution device 101 related to coded images such as the image quality (compression rate), and from that information it is possible to know coding information for the image data received via the transmission path 107.

Also, the session information management unit 103 sets at least one of the following:
- coding setting for coded image data 1 and coded image data 2
- coding option (used tool)
- payload option for coded data
- information corresponding to the payload type of the RTP header that identifies the coded data, and
- information corresponding to SSRC or CSRC,
and then notifies the image data reception device 108 of this information by way of the distribution information transmission unit 102, or this information can be set in advance between the image data distribution device 101 and image data reception device 108.

When both coded image data 1 and coded image data 2 are received and there is overlapping image data, the coded data reconstruction unit 112 selects data based on a function corresponding to RTP, RTP header sequence number, payload type, SSRC, CSRC and/or information related to the image quality that was received by the session information reception unit 110, then reconstructs the data into single image data and outputs the reconstructed data to the decoder 113. Since it is only necessary to decode that single image data, the load of the decoding process by the decoder 113 does not increase.

Depending on the reception environment, the image quality of the distributed image data is optimized as described below.

The quality (compression rate, etc.) of coded image data 1 and coded image data 2 is changed, for example, the quality of coded image data 1 is presumed to be higher quality.

The coded image data 1 transmission unit 105 and coded image data 2 transmission unit 106 set coded image data 2 such that it is routed via the transmission path 107 at a higher priority than coded image data 1; or the coded image data 1 transmission unit 105 and coded image data 2 transmission unit 106 set coded image data 2 such that it is sent via a wireless transmission path at higher power.

Supposing that the image data reception device 108 of recipient A and the image data reception device 108 of recipient B both receive distributed moving image data, then it is supposed that compared with the image data reception device 108 of recipient B, the image data reception device 108 of recipient A has more space in the traffic on the network, for example, or has a better environment for wireless reception.

Since the image data reception device 108 of recipient A has more space in the traffic on the network, or has a good environment for wireless reception, it is possible to receive both the high quality image data of coded image data 1 and the low quality image data of coded image data 2. Moreover, even in the event that there are errors or failures (or losses) in the image data of coded image data 1, the image data reception device 108 of recipient A is able to supplement the data of that location with the image data of coded image data 2, so due to the good reception environment, it is possible to reproduce high quality and stable moving image data.

At this time, when the image data reception device 108 of recipient A is used in an environment in which the amount of usable power is limited, such as when operating by battery, and/or when the reception environment is good and it is possible to receive coded image data 1 with hardly any errors or losses, it is possible to perform control to stop reception of coded image data 2 in order to lengthen the operating time of the device as much as possible.

On the other hand, when the image data reception device 108 is connected to a large capacity battery or to an AC power supply, it is possible to receive both coded image data 1 or coded image data 2. In this way, it is possible to control whether or not to receive data according to the usable power or reception environment. Construction can also be such that recipient A can set the number of image data to be received by the image data reception device 108.

The image data reception device 108 of recipient B can receive coded image data 2 that is distributed with high priority routing or distributed wirelessly at high power, and due to the poor reception environment, is able to reproduce moving image data for which there is a possibility of having lower quality than that reproduced by the image data reception device 108 of recipient A.

At this time as well, when the image data reception device 108 of recipient B is used in an environment in which power is limited, such as during battery operation, it is possible to stop reception of coded image data 1 and to receive only coded image data 2 in order to lengthen the operating time of the device as long as possible.

On the other hand, when the image data reception device 108 of recipient B is connected to a large capacity battery or to an AC power supply, it is also possible to have it receive both coded image data 1 and coded image data 2. In this way, it is possible to control whether or not to receive data according to the amount of usable power or the reception environment.

Construction can also be such that the recipient B can set the number of image data to be received by the image data reception device 108.

Moreover, compared with the distribution of the high quality coded image data 1, distribution of the low quality coded image data 2 is suitable to distribution on a network with little space in the traffic, and since transmission at high power via a wireless transmission path is easy, it can also be applied to distribution in an environment with limited resources.

Of course, this embodiment can also be constructed such that there is a plurality of transmission paths, and such that coded image data 1, coded image data 2 and information related to these coded image data are transmitted using different transmission paths.

In this example, sessions for distributing coded image data 1 and coded image data 2 can be such that at least one is transmitted using a unicast method, or at least one is transmitted using a multicast method, or transmitted using a broadcast method.

Also, of course the function and processing of the distribution information transmission unit 102, session information management unit 103, image data storing/generation unit 104, coded image data 1 transmission unit 105 and coded image data 2 transmission unit 106 of the image data distribution device 101 can be performed by program control that is executed by a computer constituting an image data distribution device 101. Moreover, the function and processing of the session information reception unit 109, coded image data 1 reception unit 110, coded image data 2 reception unit 111, coded data reconstruction unit 112 and decoder 113 of the image data reception device 108 can be performed by program control that is executed by a computer constituting an image data reception device 108.

### [Second Embodiment of the Invention]

In a second embodiment of the invention, the image data distribution device comprises: means for distributing both moving image data and coded data for at least part of a frame of moving image data that has been coded in intra-macro-blocks in different sessions, and means for setting routing priority control in the case of a transmission path, or setting power control in the case of a wireless transmission path for each session for distributing moving image data. Also, the image data reception device comprises: means for receiving data that is distributed in at least one session, and means for selecting data from among the received moving image data based on image quality, and then reconstructing and decoding that data as single moving image data. Furthermore, construction is also possible in which a means is included for selecting whether or not to receive the data of at least one session based on at least one of the error/loss ratio of received data, the usable power of the reception device, and a pre-determined setting.

### [Example 2]

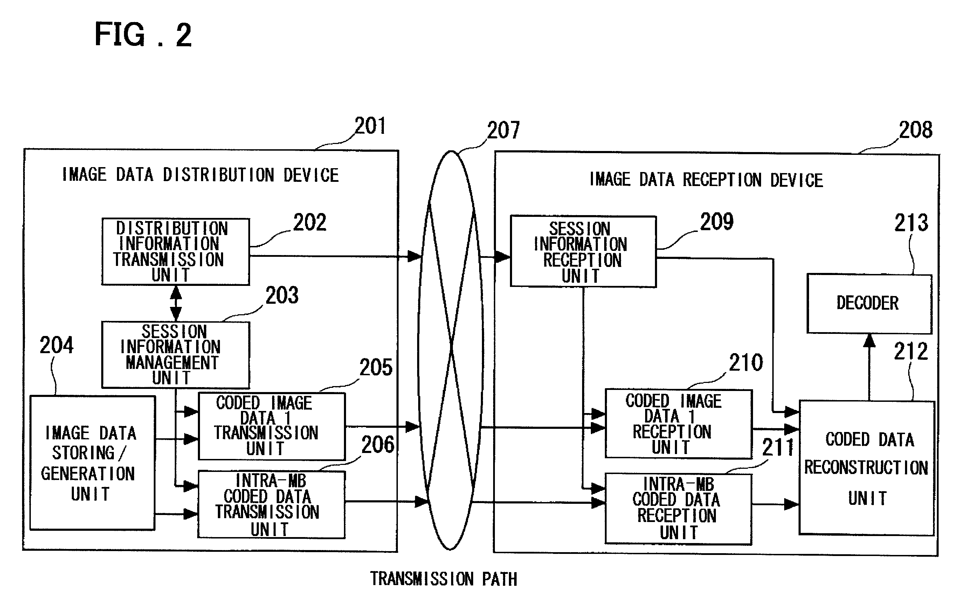

Next, the second example of the present invention will be explained with reference to the drawings. Fig. 2 is a drawing showing the construction of this second example of the invention. As shown in Fig. 2, this example comprises: an image data distribution device 201, an image data reception device 208, and a transmission path 207 for transmitting coded moving image data. In this example, the image data distribution device 201 is connected to the transmission path 207, which is an IP (Internet Protocol) network, and it distributes coded moving image data using UDP/IP; and the image reception device 208 is a client terminal that is connected to the IP network.

The image data distribution device 201 comprises: a distribution information transmission unit 202, session information management unit 203, image data storing/generation unit 204, coded image data transmission unit 205, and intra-mega-block (Intra-MB) coded data transmission unit 206.

The image data reception device 208 comprises: a session information reception unit 209, coded image data reception unit 210, intra-macro-block (Intra-MB) coded data reception unit 211, coded data reconstruction unit 212 and decoder 213. The operation of the image data distribution device 201 and image data reception device 208 will be explained below in that order.

In the image data distribution device 201, image data, which was
- stored (accumulated) in advance,
- coded and generated in real time, or
- converted and generated in real time from existing image data by the image data storing/generation unit 204, is sent by the coded image data transmission unit 205 and Intra-MB-coded image data transmission unit 206 via the transmission path 207 based on routing priority information for the transmission path 207 and/or power control information for a wireless transmission path for each session set by the session information management unit 203.

Also, the session information management unit 203 manages information related to the type of coded image data and notifies the image data reception device 208 by way of the distribution information transmission unit 202.

When a plurality of overlapping image data is received by the image data reception device 208, the coded image data transmission unit 205 and the Intra-MB coded image data transmission unit 206 have a function for adding the appropriate information to the RTP so that data can be selected and so that data can be properly rearranged in the case that the order in which the data is received is changed. When doing this, the same RTP sequence numbers can be given to coded data for the same position in the same frame of the same image, and the payload type and/or SSRC (Synchronization Source identifier) and/or CSRC (Contributing Source identifier) can also be added in order to indicate whether the data is coded image data or intra-macro-block data.

Also, in this example, during transmission, when intra-macro-block coded image data is sent having a time difference with respect to the coded image data that is longer than data error or the burst length of loss in the transmission path 207, for example, the possibility for both the coded image data and intra-macro-block coded image data to receive the effect of error or loss in the transmission path is reduced; and when the image data reception device 208 comprises a reception buffer that is greater than the time difference, it is possible to distribute more stable image data.

This example can also be constructed such that the session information management unit 203 manages the time difference between the transmission of a plurality of coded image data of the same image and notifies the image data reception device 208 by way of the distribution information transmission unit 202 of that time difference, or can also be constructed such that the time difference between transmission is set in advance between the image data distribution device 201 and image data reception device 208, and that image data reception device 208 sets the reception buffer amount based on that time difference.

In the image data reception device 208, the session information reception unit 209 receives information from the image data distribution device 201 related to the type of coded data, and from that information it is possible to know the type of coded data received via the transmission path 207.

Also, the session information management unit 203 sets at least one of the following:
- coding setting for coded data
- coding option (used tool)
- payload option for coded data
- information corresponding to the payload type of the RTP header that identifies the coded data, and
- information corresponding to SSRC or CSRC,
and then notifies the image data reception device 208 of this information by way of the distribution information transmission unit 202, or this information can be set in advance between the image data distribution device 201 and image data reception device 208.

When both coded image data and intra-macro-block coded data are received and there is overlapping image data, the coded data reconstruction unit 212 reconstructs the data into single image data based on a function corresponding to RTP, RTP header sequence number, payload type, SSRC, CSRC and or information related to the image quality that was received by the session information reception unit 110, then reconstructs the data into single image data and outputs the reconstructed data to the decoder 113. Since it is only necessary to decode that single image data, the load of the decoding process by the decoder 113 does not increase.

Depending on the reception environment, the image quality of the distributed image data is optimized as described below.

For an intra-macro-block, of the coded frame, only part of a macro block, for example, an area having a large motion vector, is selected and coded.

The coded image data transmission unit 205 and Intra-MB coded image data transmission unit 206 set the coded image data such that it is routed via the transmission path 207 at a higher priority than the intra-macro-block coded image data; or the coded image data transmission unit 205 and Intra-MB coded image data transmission unit 206 set the coded image data such that it is sent via a wireless transmission path at higher power.

Supposing that the image data reception device 208 of recipient A and the image data reception device 208 of recipient B both receive distributed moving image data, it is supposed that compared with the image data reception device 208 of recipient B, the image data reception device 208 of recipient A has more space in the traffic on the network, for example, or has a better environment for wireless reception.

Since the image data reception device 208 of recipient A has more space in the traffic on the network, or has a good environment for wireless reception, it is possible to receive both the coded image data and the intra-macro-block coded image data. Moreover, even in the event that there are errors or lapses in part of the coded image data, the image data reception device 208 of recipient A is able to supplement that data if it possible to receive the coded data of the macro block of that location from the intra-macro-block coded data, so due to the good reception environment, it is possible to reproduce high quality and stable moving image data.

The image data reception device 208 of recipient B can receive coded image data that is distributed with high priority routing or distributed wirelessly at high power, and due to the poor reception environment, is able to reproduce moving image data for which there is a possibility of having more errors and lapses than that reproduced by the image data reception device 208 of recipient A.

At this time, when the image data reception device 208 of a recipient A, B is used in an environment with limited power, such as during battery operation, and/or when the reception environment is good and it is possible to receive coded image data having hardly any errors or losses, it is possible to stop receiving intra-macro-block coded data in order to lengthen the operating time of the device as long as possible.

On the other hand, when the device is connected to a large capacity battery or AC power supply, it is possible to control whether or not to receive data, such as whether or not to receive both coded image data and intra-macro-block coded data according to the usable power and reception environment.

This example can also be constructed such that it is possible for the recipient to set the type of coded image data to be received by the image data reception device 208.

Also, even when it is possible to properly receive coded image data, for example, when that data is inter frame (reference frame) coded data, by having the coded data reconstruction unit 212 periodically select intra-macro-block coded data, it is possible to obtain the same effect as CIR (Cyclic Intra Refresh) in the MPEG-4 coding method even though error or loss occurs in the transmission path; and by quickly restoring any decrease in quality of the reproduced image due to error or loss in the transmission path, it is possible to keep propagation of poor image quality to subsequent frames to a minimum.

This example can also be constructed such that there are a plurality of transmission paths, and such that the coded image data, intra-macro-block coded image data and information related to these coded image data are transmitted using different transmission paths.

Also, in this example, sessions for distributing coded image data and intra-macro-block coded data can be such that at least one is transmitted using a unicast method, or it is possible to transmit at least one using a multicast method or a broadcast method.

Also, of course the function and processing of the distribution information transmission unit 202, session information management unit 203, image data storing/generation unit 204, coded data transmission unit 205 and intra-macro-block-coded data transmission unit 206 of the image data distribution device 201 can be performed by program control that is executed by a computer constituting an image data distribution device 201. Moreover, the function and processing of the session information reception unit 209, coded image data reception unit 210, intra-macro-block coded data reception unit 211, coded data reconstruction unit 212 and decoder 213 of the image data reception device 208 can be performed by program control that is executed by a computer constituting an image data reception device 208.

### [Third Embodiment of the Invention]

In a third embodiment of the present invention, the image data distribution device comprises: means for distributing I pictures and other pictures from among I pictures, P pictures, and when existing in the coding method used for coding moving images, B (Bi-directionally-predictive) pictures of moving image data, each in a different session; and means for setting routing priority control for a transmission path or power control for a wireless transmission path for each session for distributing moving image data. The image data reception device comprises: means for receiving data distributed from at least one session, and means for reconstructing and decoding received moving image data into single moving image data. Furthermore, construction is also possible in which a means is included for selecting whether or not to receive the data of at least one session based on at least one of the error/loss ratio of received data, the usable power of the reception device, and a pre-determined setting.

### [Example 3]

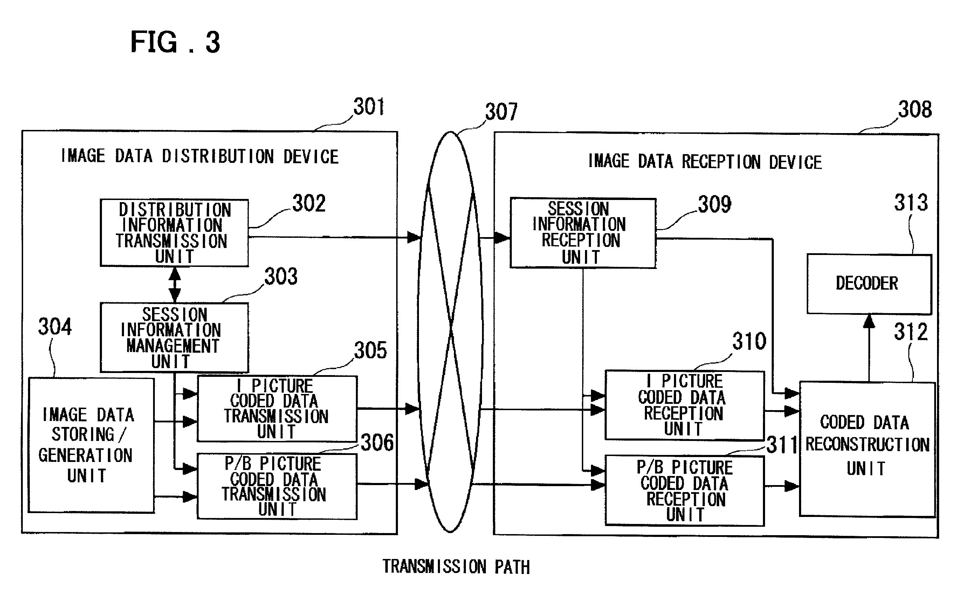

The third example of the present invention will be explained with reference to the drawings. Fig. 3 is a drawing showing the construction of this third example of the invention. As shown in Fig. 3, this example comprises: an image data distribution device 301, an image data reception device 308, and a transmission path 307 for transmitting coded moving image data. In this example, the image data distribution device 301 is connected to the transmission path 307, which is an IP network, and it distributes coded image data using UDP/IP; and the image reception device 308 is a client terminal that is connected to the IP network. In order to simplify the explanation, the example will explained in which there are three frame types: I pictures, P pictures and B pictures.

The image data distribution device 301 comprises: a distribution information transmission unit 302, session information management unit 303, image data storing/generation unit 304, I picture coded data transmission unit 305, and P/B picture coded data transmission unit 306.

The image data reception device 308 comprises: a session information reception unit 309, I picture coded data reception unit 310, P/B picture coded data reception unit 311, coded data reconstruction unit 312 and decoder 313. The operation of the image data distribution device 301 and image data reception device 308 will be explained below in that order.

In the image data distribution device 301, image data, which was
- stored (accumulated) in advance,
- coded and generated in real time, or
- converted and generated in real time from existing image data by the image data storing/generation unit 304, is sent by the I picture coded data transmission unit 305 and P/B picture coded image data transmission unit 306 via the transmission path 307 based on routing priority information for the transmission path 307 and/or power control information for a wireless transmission path for each session set by the session information management unit 303.

Also, the session information management unit 303 manages picture information distributed from each session and notifies the image data reception device 308 by way of the distribution information transmission unit 302.

The I picture coded data transmission unit 305 and P/B picture coded data transmission unit 306 have a function of adding information corresponding to RTP so that even when the order of data received by the image data reception device 308 is changed it can be properly rearranged (i.e., reconstructed).

In the image data reception device 308, the session information reception unit 309 receives information from the image data distribution device 301 related to image coding, and from that information it is possible to know the picture type of image data received via the transmission path 307.

Also, the session information management unit 303 sets at least one of the following:
- coding setting for coded data
- coding option (used tool)
- payload option for coded data
- information corresponding to the payload type of the RTP header that identifies the coded data, and
- information corresponding to SSRC or CSRC,
   and then notifies the image data reception device 308 of this information by way of the distribution information transmission unit 302, or this information can be set in advance between the image data distribution device 301 and image data reception device 308.
   The coded data reconstruction device 312 reconstructs the received I picture , P picture and B picture coded data into single image data based on a function corresponding to RTP, the sequence number of the RTP header, payload type, SSRC, CSRC and/or information received by the session information reception unit 309, and outputs it to the decoder 313.
   Depending on the reception environment, the image quality of the distributed image data is optimized as described below.
   The I picture coded data transmission unit 305 and P/B picture coded data transmission unit 306 are set such that they route I picture coded data via the transmission path 307 at a higher priority than P/B picture coded data; or the I picture coded data transmission unit 305 and P/B picture coded data transmission unit 306 are set such that they transmit I picture coded data via a wireless transmission path at higher power.
   Supposing that the image data reception device 308 of recipient A and the image data reception device 308 of recipient B both receive distributed moving image data, it is supposed that compared with the image data reception device 308 of recipient B, the image data reception device 308 of recipient A has more space in the traffic on the network, for example, or has a better environment for wireless reception.
   Since the image data reception device 308 of recipient A has more space in the traffic, or has a good wireless reception environment, it is possible to receive both I picture coded data and P/B picture coded data, and depending on how good the reception environment is, it is possible to reproduce high quality moving image data having smooth movement.
   The image data reception device 308 of recipient B can receive I picture coded data that is distributed with high priority routing or distributed wirelessly at high power, and due to the poor reception environment, is able to reproduce moving image data for which, however, there is a possibility of having lower quality than that reproduced by the image data reception device 308 of recipient A.
   At this time, when the image data reception device 308 of a recipient A, B is used in an environment with limited power, such as during battery operation, for example, when the recipient desires to maintain long operating time of the device more than maintaining image quality, it is possible to stop receiving P/B picture coded data in order to lengthen the operating time of the device as long as possible.
   On the other hand, when the image data reception device 308 is connected to a large capacity battery or to an AC power supply, it is possible to receive coded data for all kinds of pictures. In this way, it is possible to control whether or not to receive data according to the usable power or reception environment.
   In this example it is also possible for the recipient to set the type of picture coded data to be received by the image data reception device 308.
   Also, in comparison with conventional wireless distribution of coded data of all kinds of pictures in the same session, having the same routing priority or same power, it is possible to set flexible priority or control the power according to the operating conditions even under conditions of high traffic or conditions of limited wireless resources, and thus it is possible to distribute moving image data having little change in quality.
   This example can also be constructed such that there is a plurality of transmission paths, and such that I picture coded image data, P/B picture coded data and information related to these coded image data are transmitted using different transmission paths.
   Also, in this example, sessions for distributing I picture coded data and P/B picture coded data can be such that at least one is transmitted using a unicast method, or it is possible to transmit at least one using a multicast method or a broadcast method.
   Also, of course the function and processing of the distribution information transmission unit 302, session information management unit 303, image data storing/generation unit 304, I picture coded data transmission unit 305 and P/B picture coded data transmission unit 306 of the image data distribution device 301 can be performed by program control that is executed by a computer constituting (making up) an image data distribution device 301. Moreover, the function and processing of the session information reception unit 309, I picture coded data reception unit 310, P/B picture coded data reception unit 311, coded data reconstruction unit 312 and decoder 313 of the image data reception device 308 can be performed by program control that is executed by a computer constituting an image data reception device 308.

### [Fourth Embodiment of the Invention]

In a fourth embodiment of the present invention, the image data distribution device comprises: means for distributing I/P pictures and other pictures from among I pictures, P pictures, and B pictures of moving image data, each in a different session; and means for setting routing priority control for a transmission path or power control for a wireless transmission path for each session for distributing moving image data. The image data reception device comprises: means for receiving data distributed from at least one session, and means for reconstructing and decoding received moving image data into single moving image data. Furthermore, construction is also possible in which a means is included for selecting whether or not to receive the data of at least one session based on at least one of the error/loss ratio of received data, the usable power of the reception device, and a pre-determined setting.

### [Example 4]

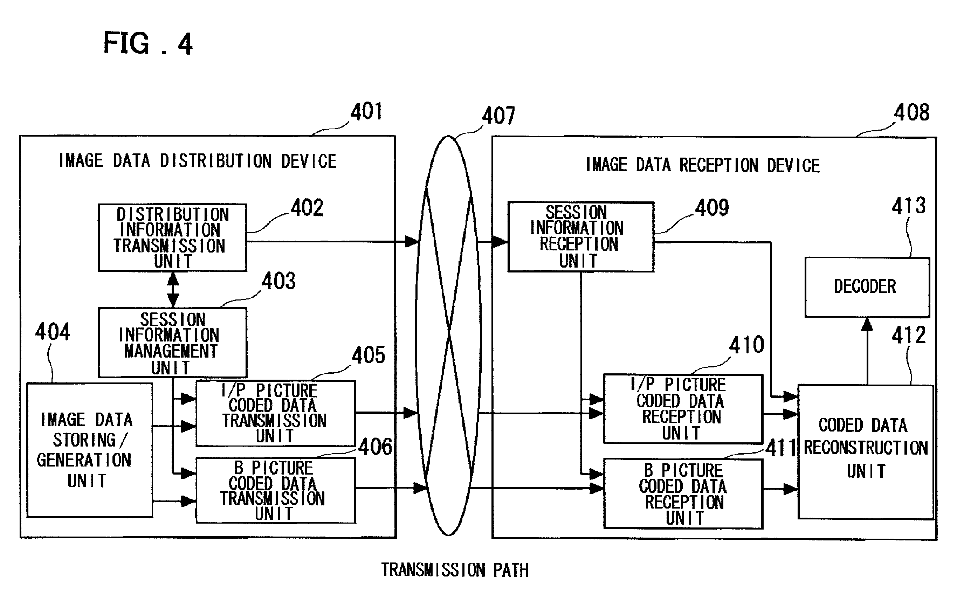

The fourth example of the present invention will be explained with reference to the drawings. Fig. 4 is a drawing showing the construction of this fourth example of the invention. As shown in Fig. 4, this example comprises: an image data distribution device 401, an image data reception device 408, and a transmission path 407 for transmitting coded moving image data. In this example, the image data distribution device 401 is connected to the transmission path 407, which is an IP network, and it distributes coded image data using UDP/IP; and the image reception device 408 is a client terminal that is connected to the IP network. In order to simplify the explanation, the example will explained in which there are three frame types: I pictures, P pictures and B pictures.

The image data distribution device 401 comprises: a distribution information transmission unit 402, session information management unit 403, image data storing/generation unit 404, I/P picture coded data transmission unit 405, and B picture coded data transmission unit 406.

The image data reception device 408 comprises: a session information reception unit 409, I/P picture coded data reception unit 410, B picture coded data reception unit 411, coded data reconstruction unit 412 and decoder 413. The operation of the image data distribution device 401 and image data reception device 408 will be explained below in that order.

In the image data distribution device 401, image data, which was
- stored (accumulated) in advance,
- coded and generated in real time, or
- converted and generated in real time from existing image data by the image data storing/generation unit 404, is sent by the I/P picture coded data transmission unit 405 and B picture coded image data transmission unit 406 via the transmission path 407 based on routing priority information for the transmission path 407 and/or power control information for a wireless transmission path for each session set by the session information management unit 403.

Also, the session information management unit 403 manages picture information distributed from each session and notifies the image data reception device 408 by way of the distribution information transmission unit 402.

The I/P picture coded data transmission unit 405 and B picture coded data transmission unit 406 have a function of adding information corresponding to RTP so that even when the order of data received by the image data reception device 408 is changed it can be properly rearranged (i.e., reconstructed).

In the image data reception device 408, the session information reception unit 409 receives information from the image data distribution device 401 related to image coding, and from that information it is possible to know the picture type of image data received via the transmission path 407.

The session information management unit 403 sets at least one of the following:
- coding setting for coded data
- coding option (used tool)
- payload option for coded data
- information corresponding to the payload type of the RTP header that identifies the coded data, and/or
- information corresponding to SSRC or CSRC,
   and then notifies the image data reception device 408 of this information by way of the distribution information transmission unit 402, or this information can be set in advance between the image data distribution device 401 and image data reception device 408.
   The coded data reconstruction device 412 reconstructs the received I picture , P picture and B picture coded data into single image data based on a function corresponding to RTP, the sequence number of the RTP header, payload type, SSRC, CSRC and/or information received by the session information reception unit 409, and outputs it to the decoder 413.
   Depending on the reception environment, the image quality of the distributed image data is optimized as described below.
   The I/P picture coded data transmission unit 405 and B picture coded data transmission unit 406 are set such that they route I/P picture coded data via the transmission path 407 at a higher priority than B picture coded data; or the I/P picture coded data transmission unit 405 and B picture coded data transmission unit 406 are set such that they transmit I/P picture coded data via a wireless transmission path at higher power.
   Supposing that the image data reception device 408 of recipient A and the image data reception device 408 of recipient B both are receiving distributed moving image data, it is supposed that compared with the image data reception device 408 of recipient B, the image data reception device 408 of recipient A has more space in the traffic on the network, for example, or has a better environment for wireless reception.
   Since the image data reception device 408 of recipient A has more space in the traffic, or has a good wireless reception environment, it is possible to receive both I/P picture coded data and B picture coded data, and depending on how good the reception environment is, it is possible to reproduce high quality moving image data having smooth movement.
   The image data reception device 408 of recipient B can receive I/P picture coded data that is distributed with high priority routing or distributed wirelessly at high power, and due to the poor reception environment, is able to reproduce moving image data for which there is a possibility of having lower quality than that reproduced by the image data reception device 408 of recipient A.
   At this time, when the image data reception device 408 of a recipient A, B is used in an environment with limited power, such as during battery operation, for example, when the recipient desires to maintain long operating time of the device more than maintaining image quality, it is possible to stop receiving B picture coded data in order to lengthen the operating time of the device as long as possible.
   On the other hand, when the image data reception device 408 is connected to a large capacity battery or to an AC power supply, it is possible to receive coded data for all kinds of pictures. In this way, it is possible to control whether or not to receive data according to the usable power or reception environment.
   In this embodiment it is also possible for the recipient to set the type of picture coded data to be received by the image data reception device 408.
   Also, in comparison with conventional wireless distribution of coded data of all kinds of pictures in the same session, having the same routing priority or same power, it is possible to set flexible priority or control the power according to the operating conditions even under conditions of high traffic or conditions of limited wireless resources, and thus it is possible to distribute moving image data having little change in quality.
   This example can also be constructed such that there is a plurality of transmission paths, and such that I/P picture coded image data, B picture coded data and information related to these coded image data are transmitted using different transmission paths.
   Also, in this example, sessions for distributing I/P picture coded data and B picture coded data can be such that at least one is transmitted using a unicast method, or it is possible to transmit at least one using a multicast method or a broadcast method.
   Also, of course the function and processing of the distribution information transmission unit 402, session information management unit 403, image data storing/generation unit 404, I/P picture coded data transmission unit 405 and B picture coded data transmission unit 406 of the image data distribution device 401 can be performed by program control that is executed by a computer constituting an image data distribution device 401. Moreover, the function and processing of the session information reception unit 409, I/P picture coded data reception unit 410, B picture coded data reception unit 411, coded data reconstruction unit 412 and decoder 413 of the image data reception device 408 can be performed by program control that is executed by a computer constituting an image data reception device 408.

### [Fifth Embodiment of the Invention]

In a fifth embodiment of the present invention, the image data distribution device comprises: means for distributing I pictures, P pictures and B pictures from among I pictures, P pictures, and B pictures of moving image data, each in a different session; and means for setting routing priority control for a transmission path or power control for a wireless transmission path for each session for distributing moving image data. The image data reception device comprises: means for receiving data distributed from at least one session, and means for reconstructing and decoding received moving image data into single moving image data. Furthermore, construction is also possible in which means is included for selecting whether or not to receive the data of at least one session based on at least one of the error/loss ratio of received data, the usable power of the reception device, and a pre-determined setting.

### [Exaple 5]

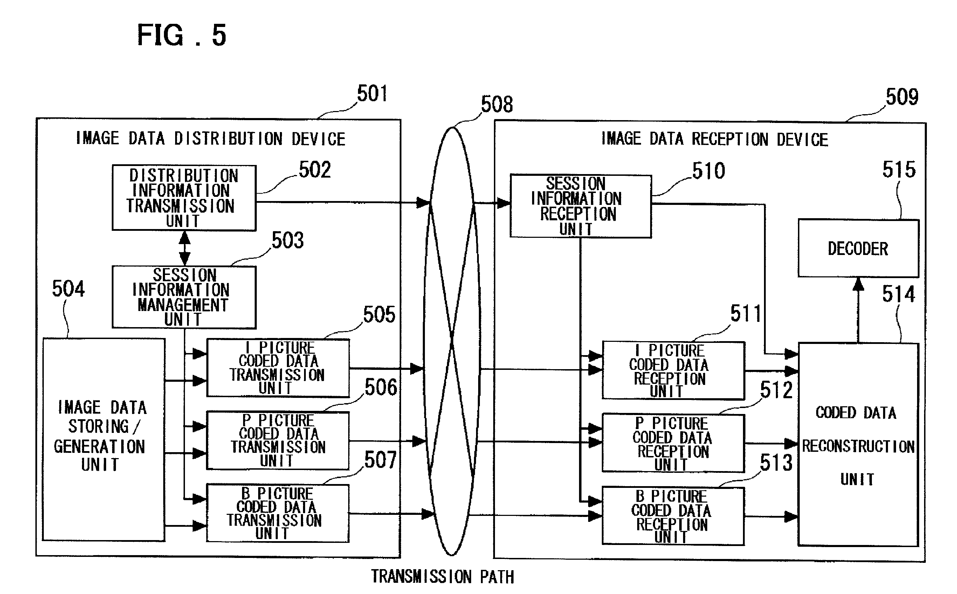

The fifth example of the present invention will be explained with reference to the drawings. Fig. 5 is a drawing showing the construction of this fifth example of the invention. As shown in Fig. 5, this example comprises: an image data distribution device 501, an image data reception device 509, and a transmission path 508 for transmitting coded moving image data. In this example, the image data distribution device 501 is connected to the transmission path 508, which is an IP network, and it distributes coded image data using UDP/IP; and the image reception device 509 is a client terminal that is connected to the IP network. In order to simplify the explanation, the example will be explained in which there are three frame types: I pictures, P pictures and B pictures.

The image data distribution device 501 comprises: a distribution information transmission unit 502, session information management unit 503, image data storing/generation unit 504, I picture coded data transmission unit 505, P picture coded data transmission unit 506, and B picture coded data transmission unit 507.

The image data reception device 509 comprises: a session information reception unit 510, I picture coded data reception unit 511, P picture coded data reception unit 512, B picture coded data reception unit 513, coded data reconstruction unit 514 and decoder 515. The operation of the image data distribution device 501 and image data reception device 509 will be explained below in that order.

In the image data distribution device 501, image data, which was
- stored (accumulated) in advance,
- coded and generated in real time, or
- converted and generated in real time from existing image data by the image data storing/generation unit 504, is sent by the I picture coded data transmission unit 505, P picture coded data transmission unit 506 and B picture coded image data transmission unit 507 via the transmission path 508 based on routing priority information for the transmission path 508 and/or power control information for a wireless transmission path for each session set by the session information management unit 503.

The session information management unit 503 manages picture information distributed from each session and notifies the image data reception device 509 by way of the distribution information transmission unit 502.

The I picture coded data transmission unit 505, P picture coded data transmission unit 506 and B picture coded data transmission unit 507 have a function of adding information corresponding to RTP so that even when the order of data received by the image data reception device 509 is changed it can be properly rearranged.

In the image data reception device 509, the session information reception unit 510 receives information from the image data distribution device 501 related to image coding, and from that information it is possible to know the picture type of image data received via the transmission path 508.

The session information management unit 503 sets at least one of the following:
- coding setting for coded data
- coding option (used tool)
- payload option for coded data
- information corresponding to the payload type of the RTP header that identifies the coded data, and
- information corresponding to SSRC or CSRC,
and then notifies the image data reception device 509 of this information by way of the distribution information transmission unit 502, or this information can be set in advance between the image data distribution device 501 and image data reception device 509.

The coded data reconstruction device 514 reconstructs the received I picture , P picture and B picture coded data into single image data based on a function corresponding to RTP, the sequence number of the RTP header, payload type, SSRC, CSRC and/or information received by the session information reception unit 510, and outputs it to the decoder 515.

Depending on the reception environment, the image quality of the distributed image data is optimized as described below.

The I picture coded data transmission unit 505, P picture coded data transmission unit 506 and B picture coded data transmission unit 507 are set such that they route I picture coded data via the transmission path 508 at the highest priority, P picture coded data at the next priority level and B picture coded data at the lowest priority; or the I picture coded data transmission unit 505, P picture coded data transmission unit 506 and B picture coded data transmission unit 507 are set such that they transmit I picture coded data via a wireless transmission path at the highest power, P picture coded data at the next power level and B picture coded data at the lowest power.

Supposing that the each of the image data reception devices 509 of recipient A, recipient B and recipient C receive distributed moving image data, it is supposed that the image data reception device 509 of recipient A has more space in the traffic on the network or better environment for wireless reception than the image data reception device 509 of recipient B, and that the image data reception device 509 of recipient B has more space in the traffic on the network or better environment for wireless reception than the image data reception device 509 of recipient C.

Since the image data reception device 509 of recipient A has more space in the traffic, or has a good wireless reception environment, it is able to receive I picture coded data, P picture coded data and B picture coded data, and depending on how good the reception environment is, it is able to reproduce high quality moving image data having smooth movement.

The image data reception device 509 of recipient B can receive I picture coded data and P picture coded data that are routed at the highest priority or the next highest priority routing, or distributed wirelessly at the highest power or next highest power, and due to the poorer reception environment, is able to reproduce moving image data having relatively smooth motion but lower quality than that reproduced by the image data reception device 509 of recipient A.

The image data reception device 509 of recipient C is able to receive I picture coded data that is routed at the highest priority or distributed wirelessly at the highest power, however, due to the poorer reception environment, it is able to reproduce moving image data having poorer quality than that reproduced by the image data reception devices 509 of recipient A and recipient B.

At this time, when the image data reception device 509 of a recipient A, B or C is used in an environment with limited power, such as during battery operation, for example, and the recipient desires to maintain long operating time of the device more than maintaining image quality, it is possible to
- stop receiving less important B picture coded data, or
- stop receiving B picture coded data and P picture coded data in order to lengthen the operating time of the device as long as possible.

On the other hand, when the image data reception device 509 is connected to a large capacity battery or to an AC power supply, it is possible to control whether or not to receive data according to the usable power or reception environment, such as receiving coded data starting from data having the highest importance.

In this example it is also possible for the recipient to set the type of picture coded data to be received by the image data reception device 509.

Also, in comparison with conventional wireless distribution of coded data of all kinds of pictures in the same session, having the same routing priority or same power, it is possible to set flexible priority or control the power according to the operating conditions even under conditions of high traffic or conditions of limited wireless resources, and thus it is possible to distribute moving image data having little change in quality.

This example can also be constructed such that there is a plurality of transmission paths, and such that I picture coded data, P picture coded data, B picture coded data and information related to these coded image data are transmitted using different transmission paths.

Also, in this example, sessions for distributing I picture coded data, P picture coded data and B picture coded data can be such that at least one is transmitted using a unicast method, or it is possible to transmit at least one using a multicast method or a broadcast method.

Also, of course the function and processing of the distribution information transmission unit 502, session information management unit 503, image data storing/generation unit 504, I picture coded data transmission unit 505, P picture coded data transmission unit 506 and B picture coded data transmission unit 507 of the image data distribution device 501 can be performed by program control that is executed by a computer constituting an image data distribution device 501. Moreover, the function and processing of the session information reception unit 510, I picture coded data reception unit 511, P picture coded data reception unit 512, B picture coded data reception unit 513, coded data reconstruction unit 514 and decoder 515 of the image data reception device 509 can be performed by program control that is executed by a computer constituting an image data reception device 509.

### [Sixth Embodiment of the Invention]

In a sixth embodiment of the present invention, the image data distribution device comprises: means for distributing, I picture coded data, P picture coded data, and when existing in the coding method of coding moving images, B picture coded data of moving image data, and coded data for that frame of moving image data for which at least part is coded in intra-macro blocks (Intra-MB), each in a different session; and means for setting routing priority control for a transmission path or power control for a wireless transmission path for each session for distributing moving image data. The image data reception device comprises: means for receiving data distributed from at least one session, and means for reconstructing and decoding received moving image data into single moving image data. Furthermore, construction is also possible in which a means is included for selecting whether or not to receive the data of at least one session based on at least one of the error/loss ratio of received data, the usable power of the reception device, and a pre-determined setting.

### [Example 6]

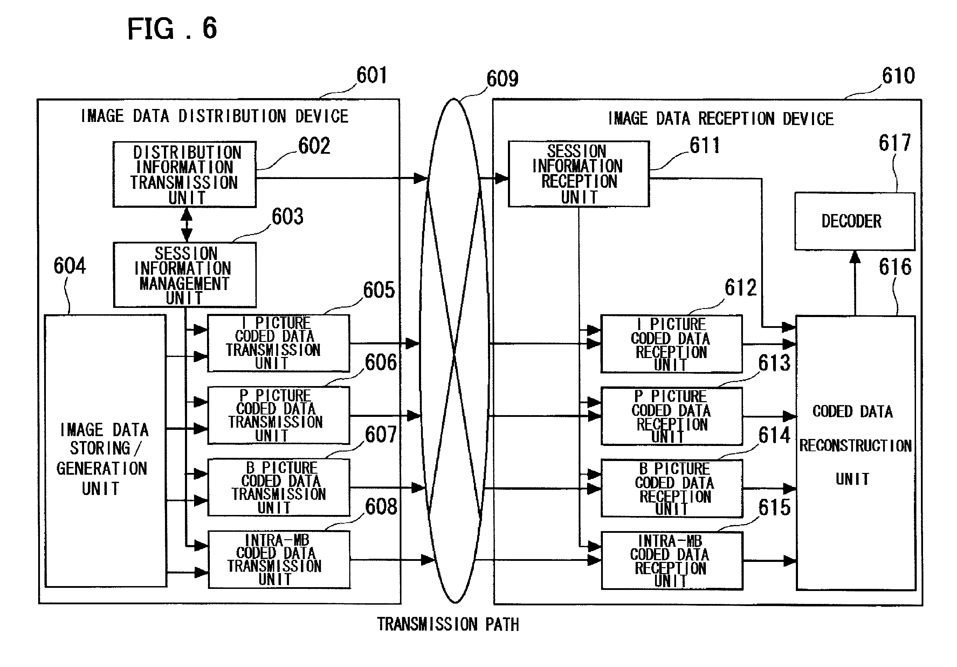

The sixth example of the present invention will be explained with reference to the drawings. Fig. 6 is a drawing showing the construction of this sixth example of the invention. As shown in Fig. 6, this example comprises: an image data distribution device 601, an image data reception device 610, and a transmission path 609 for transmitting coded image data. In this example, the image data distribution device 601 is connected to the transmission path 609, which is an IP network, and it distributes coded image data using UDP/IP; and the image reception device 610 is a client terminal that is connected to the IP network. In order to simplify the explanation, the example will be explained in which there are three frame types: I pictures, P pictures and B pictures.

The image data distribution device 601 comprises: a distribution information transmission unit 602, session information management unit 603, image data storing/generation unit 604, I picture coded data transmission unit 605, P picture coded data transmission unit 606, B picture coded data transmission unit 607 and intra-macro-block (Intra-MB) coded data transmission unit 608.

The image data reception device 610 comprises: a session information reception unit 611, I picture coded data reception unit 612, P picture coded data reception unit 613, B picture coded data reception unit 614, intra-macro-block (Intra-MB) coded data reception unit 615, coded data reconstruction unit 616 and decoder 617. The operation of the image data distribution device 601 and image data reception device 610 will be explained below in that order.

In the image data distribution device 601, image data, which was
- stored (accumulated) in advance,
- coded and generated in real time, or
- converted and generated in real time from existing image data by the image data storing/generation unit 604, is sent by the I picture coded data transmission unit 605, P picture coded data transmission unit 606, B picture coded image data transmission unit 607 and Intra-MB coded data transmission unit 608 via the transmission path 609 based on routing priority information for the transmission path 609 and/or power control information for a wireless transmission path for each session set by the session information management unit 603.

The session information management unit 603 manages picture information distributed from each session and notifies the image data reception device 610 by way of the distribution information transmission unit 602.

The I picture coded data transmission unit 605, P picture coded data transmission unit 606, B picture coded data transmission unit 607 and Intra-MB coded data transmission unit 608 have a function of adding information corresponding to RTP so that data can be selected when a plurality of overlapping image data is received by the image data reception device 610, and so that when the order of the received data is changed it can be properly rearranged. When doing this, it is also possible to assign the same RTP sequence number to the I, P and B picture coded data for the same location in the image for which intra-macro-block coded data is coded, for example, and to further to assign the payload type, which indicates whether the data is image coded data or an intra-macro-block, and/or SSRC, and/or CSRC.

Also, during transmission, by transmitting intra-macro-block coded data having a time difference with respect to the I, P and B picture coded data that is longer than the burst length of error or loss in the transmission path 609, it is possible to lower the possibility for both the I, P and B picture coded data and intra-macro-block coded data to receive the effect of error or loss in the transmission path; and when the image data reception device comprises a reception buffer that is equal to or greater than this time difference, it is possible to distribute more stable image data.

In this example, the session information management unit 603 manages the time difference when transmitting a plurality of image data for the same image and notifies the image data reception device 610 of the time difference by way of the distribution information transmission unit 602, or it is possible to set the time difference during transmission between the image data distribution device 601 and image data reception device 610 in advance, and to set the reception buffer amount for the image data reception device 610 based on that time difference.

In the image data reception device 610, the session information reception unit 611 receives information from the image data distribution device 601 related to image coding, and from that information it is possible to know the picture and block type of image data received via the transmission path 609.

The session information management unit 603 sets at least one of the following:
- coding setting for coded data
- coding option (used tool)
- payload option for coded data
- information corresponding to the payload type of the RTP header that identifies the coded data, and
- information corresponding to SSRC or CSRC,
   and then notifies the image data reception device 610 of this information by way of the distribution information transmission unit 602, or this information can be set in advance between the image data distribution device 601 and image data reception device 610.

The coded data reconstruction device 616 reconstructs the received I picture, P picture, B picture coded data and intra-macro-block coded data into single image data based on a function corresponding to RTP, the sequence number of the RTP header, payload type, SSRC, CSRC and/or information received by the session information reception unit 611, and outputs it to the decoder 617. Since it is only necessary to decode that single image data, the load of the decoding process by the decoder 617 is not increased.

Depending on the reception environment, the image quality of the distributed image data is optimized as described below.

An intra-macro block is just part of the macro blocks selected and coded from a coded frame, such as locations where the motion vector is large.

The I picture coded data transmission unit 605, P picture coded data transmission unit 606, B picture coded data transmission unit 607 and Intra-MB coded data transmission unit 608 are set such that they route coded data via the transmission path 609 such that
- I picture coded data has the highest priority,
- P picture coded data has the next priority,
- B picture coded data has the next priority, and
- intra-macro-block coded data has the lowest priority; or
the I picture coded data transmission unit 605, P picture coded data transmission unit 606, B picture coded data transmission unit 607 and Intra-MB coded data transmission unit 608 are set such that they transmit coded data via a wireless transmission path such that
- I picture coded data is transmitted at the highest power,
- P picture coded data is transmitted at the next highest power,
- B picture coded data is transmitted at the next highest power, and
- intra-macro-block coded data is transmitted at the lowest power.

Supposing that the each of the image data reception devices 610 of recipient A, recipient B, recipient C and recipient D receive distributed moving image data, then it is supposed that
- the image data reception device 610 of recipient A has more space in the traffic on the network or better environment for wireless reception than the image data reception device 610 of recipient B,
- the image data reception device 610 of recipient B has more space in the traffic on the network or better environment for wireless reception than the image data reception device 610 of recipient C, and
- that the image data reception device 610 of recipient C has more space in the traffic on the network or better environment for wireless reception than the image data reception device 610 of recipient D.

Since the image data reception device 610 of recipient A has more space in the traffic, or has a good wireless reception environment, it is possible to receive I picture coded data, P picture coded data, B picture coded data, and intra-macro-block coded data, and depending on how good the reception environment is, it is possible to reproduce high quality moving image data having smooth movement. Also, in the image data reception device 610 of recipient A, even when for some reason there is error or loss in the part of the coded image data, as long as it is possible to receive coded data for macro blocks at those locations from the intra-macro-block coded data, it is possible to supplement the coded image data, or it is possible to correct macro blocks that have become poor due to errors or loss, so depending on how good the reception environment is, it is possible to reproduce stable moving image data.

The image data reception device 610 of recipient B can receive I picture coded data, P picture coded data and B picture coded data that are distributed at the highest routing priority or the next highest routing priority or distributed wirelessly at the highest power or next highest power. In the image data reception device 610 of recipient B, when error or loss occur in part of the coded image data, it is not possible to supplement or correct the data as in the case of the image data reception device 610 of recipient A, so the image quality becomes poorer, however, in all other cases it is possible to reproduce moving image data having the same quality.

The image data reception device 610 of recipient C is able to receive I picture coded data and P picture coded data that are routed at the highest priority or next highest priority or distributed wirelessly at the highest power or next highest power, however, due to the poorer reception environment, it is capable of reproducing moving image data having relatively smooth motion but poorer quality than that reproduced by the image data reception devices 610 of recipient A and recipient B.

The image data reception device 61 of recipient D is able to receive I picture coded data that is routed at the highest priority or distributed wirelessly at the highest power, however, due to the poorer reception environment, it is capable of reproducing moving image data that has poorer quality than that reproduced by the image data reception devices 610 of recipient A, recipient B or recipient C.

At this time, when the image data reception device 610 of a recipient A, B, C or D is used in an environment with limited power, such as during battery operation, for example, and the recipient desires to maintain long operating time of the device more than maintaining image quality, it is possible to lower power consumption and lengthen the operating time of the device as long as possible by stopping reception of less important intra-macro-block coded data, then stopping the reception of B picture coded data, and finally stopping reception of P picture coded data.

On the other hand, when the image data reception device 610 is connected to a large capacity battery or to an AC power supply, it is possible to control whether or not to receive data according to the usable power or reception environment, such as receiving coded data starting from data having the highest importance.

This example can also be constructed such that it is possible for the recipient to set the type of picture coded data to be received by the image data reception device 610.

Furthermore, even when the coded image data is received properly and that data is P picture or B picture coded data, by having the coded data reconstruction unit 616 periodically select intra-macro-block coded data, it is possible to obtain the same effect as CIR (Cyclic Intra Refresh) in the MPEG-4 coding method even when error or loss occurs in the transmission path; and by quickly restoring any decrease in the quality of the reproduced image due to error or loss in the transmission path, it is possible to keep propagation of the decreased image quality to subsequent frames to a minimum.

Also, in comparison with conventional wireless distribution of coded data of all kinds of pictures in the same session, having the same routing priority or same power, it is possible to set flexible priority or control the power according to the operating conditions even under conditions of high traffic or conditions of limited wireless resources, and thus it is possible to distribute moving image data having little change in quality.

This example can also be constructed such that there is a plurality of transmission paths, and such that I picture coded data, P picture coded data, B picture coded data, intra-macro-block coded data and information related to these data are transmitted using different transmission paths.

Also, in this example, sessions for distributing I picture coded data, P picture coded data, B picture coded data and intra-macro-block coded data can be such that at least one is transmitted using a unicast method, or it is possible to transmit at least one using a multicast method or a broadcast method.

Also, of course the function and processing of the distribution information transmission unit 602, session information management unit 603, image data storing/generation unit 604, I picture coded data transmission unit 605, P picture coded data transmission unit 606, B picture coded data transmission unit 607 and intra-macro-block coded data transmission unit 608 of the image data distribution device 601 can be performed by program control that is executed by a computer constituting an image data distribution device 601. Moreover, the function and processing of the session information reception unit 611, I picture coded data reception unit 612, P picture coded data reception unit 613, B picture coded data reception unit 614, intra-macro-block coded data reception unit 615, coded data reconstruction unit 616 and decoder 617 of the image data reception device 610 can be performed by program control that is executed by a computer constituting an image data reception device 611.

### [Seventh Embodiment of the Invention]

In a seventh embodiment of the present invention, the image data distribution device comprises: means for distributing a plurality of moving image data for the same image (for example, moving image data having different image quality) and error correction coded data each in a different session; and means for setting routing priority control for a transmission path or power control for a wireless transmission path for each session of at least one session for distributing data. The image data reception device comprises: means for receiving data distributed from at least one session, means for using error correction coded data to restore moving image data that was lost due to error or loss in the transmission path, and means for selecting data from among the received moving image data and restored moving image data based on the image quality, then reconstructing it into single moving image data and decoding it.

Furthermore, in this seventh embodiment of the invention, construction is also possible in which the image data reception device comprises means for selecting whether or not to receive the data of at least one session based on at least the error/loss ratio of received data, the usable power of the reception device, or a pre-determined setting.

### [Example 7]

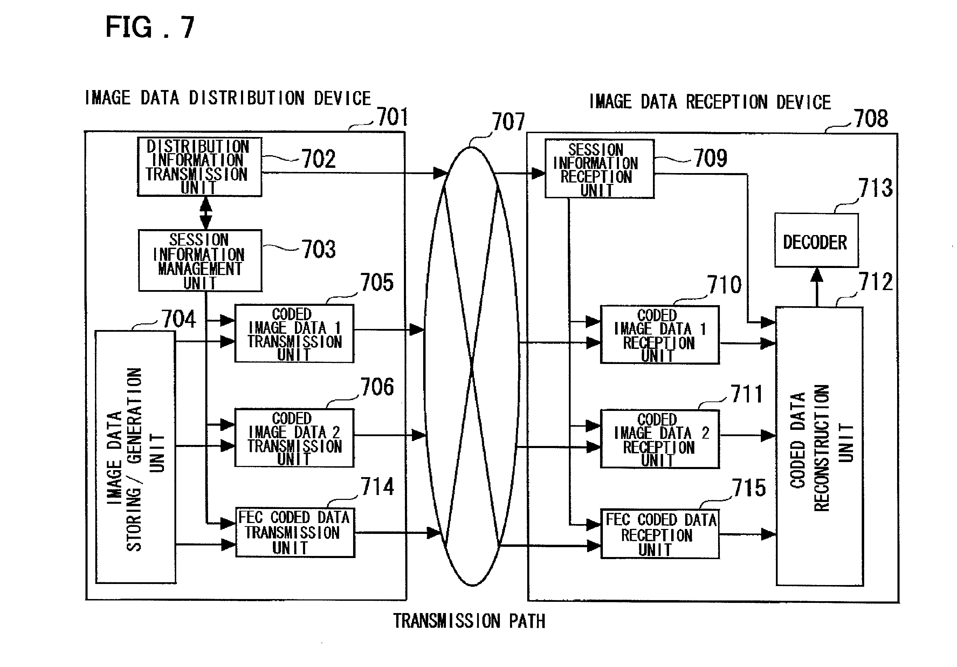

The seventh example of the invention will be explained with reference to the drawings. Fig. 7 shows the construction of this seventh example of the invention. As shown in Fig. 7, this seventh example comprises: an image data distribution device 701 that distributes coded image data, an image data reception device 708 and a transmission path 707 for transmitting coded image data and error correction coded data; and these correspond to the image data distribution device 101, image data reception device 108 and transmission path 107 of the first example. Each of the elements 702 to 706 of the image data distribution device 701, and each of the elements 709 to 713 of the image data reception device 708 correspond to each of the elements 102 to 106 of the image data distribution device 101 and each of the elements 109 to 113 of the image data reception device 108 of the first example, respectively. Only the parts that differ from the first example will be explained below. In order to simplify the explanation of this example, the number of image data to be distributed is presumed to be two, and the number error correction coded data generated from one coded data is presumed to be one, however, of course in the present invention, the number of image data to be distributed is not limited to two, and the number of error correction coded data is not limited to one.

The image data distribution device 701 comprises: a distribution information transmission unit 702, session information management unit 703, image data storing/generation unit 704, coded image data 1 transmission unit 705, coded image data 2 transmission unit 706 and FEC (forward error correction) coded data transmission unit 714.

The image data reception device 708 comprises: a session information reception unit 709, coded image data 1 reception unit 710, coded image data 2 reception unit 711, coded data reconstruction unit 712, decoder 713, and FEC coded data reception unit 715.

In the image data distribution device 701, coded image data, which was
- stored (accumulated) in advance,
- coded and generated in real time, or
- converted and generated in real time from existing coded image data by the image data storing/generation unit 604, and error correction coded data generated from any of the above coded image data are transmitted by the coded image data 1 transmission unit 705, coded image data 2 transmission unit 706 and FEC (forward error correction) coded data transmission unit 714 via the transmission path 707 based on routing priority information for the transmission path 707 and/or power control information for a wireless transmission path for each session set by the session information management unit 703. Here, forward error correction (FEC) code includes Reed Solomon code, LDPC (Low Density Parity Check) code, convolution code and like, and since the present invention uses these existing methods, a detailed explanation of them will be omitted here.

The session information management unit 703 manages information related to the image quality (compression ratio) of coded image data 1 and coded image data 2 and information related to the error correction coded data, and notifies the image data reception device 708 of that information by way of the distribution information transmission unit 702.

The FEC coded data transmission unit 714 has a function of adding information corresponding to RTP (for example, the sequence number of the RTP header) in order to be able to know which part of the coded image data the error correction coded data is for. Furthermore, it is also possible to assign a payload type and/or SRC and/or CSRC to indicate that the data is error correction coded data.

Also, the session information management unit 703 sets at least one of the following:
- coding setting for coded image data 1 and coded image data 2
- error correction code type
- error correction code setting (for example, check matrix data in LDPC code, or settings for generating this)
- coding option (used tool)
- payload option for coded data
- information corresponding to the payload type of the RTP header that identifies the coded data and error correction code, and
- information corresponding to SSRC or CSRC,
   and then can notify the image data reception device 708 of this information by way of the distribution information transmission unit 702, or this information can be set in advance between the image data distribution device 701 and image data reception device 708.

When coded image data 1 could not be received due to error or loss in the transmission path, the coded data reconstruction unit 712 uses the error correction coded data received by the FEC coded data reception unit 715 to restore coded image data 1. The case in which it is possible to receive both coded image data 1 and coded image data 2, including the restored and obtained coded image data 1, is the same as in the first example.

The method of optimizing the image quality of distributed image data according to the reception environment is also the same as in the first example; so that an image data reception device 708 having good reception environment is able to receive coded image data 1 and 2 and error correction coded data, and thus is able to reproduce higher quality and more stable moving image data. Also, since it is possible to control the routing priority of the transmission path, or transmission power for a wireless transmission path for each session for distributing the data, it is possible to perform distribution taking into consideration the network resources.

When there is a plurality of error correction coded data, the error correction coded data is generated to match several error or loss patterns in the transmission path, and by restoring the data that was in error or lost in the transmission path using error correction coded data that was optimized for the reception environment image data reception device (contents reception device) 708, the image data reception device (contents reception device) 708 is able obtain coded data of the original contents at higher probability. In this case, the image data distribution device (contents distribution device) 701 can notify the image data reception device (contents reception device) 708 of the transmission path conditions suitable for each error correction coded data, or can notify the image data reception device (contents reception device) 708 of settings for generating error correction coded data (for example, a check matrix in LDPC format, or setting information for generating this), or this can be set in advance between the image data distribution device (contents distribution device) 701 and image data reception device (contents reception device) 708.

Furthermore, when there is a plurality of error correction coded data, it is possible for the method used for the error correction code to be different, or it is also possible to select error correction coded data that can be decoded according to the reception environment or processing capability of the image data reception device (contents reception device) 708. In this case, the image data distribution device (contents distribution device) 701 notifies the image data reception device (contents reception device) 708 of each of the types of error correction code, or it is possible to set this in advance between the image data distribution device (contents distribution device) 701 and image data reception device (contents reception device) 708.

The remainder of this example is the same as the first example.

Of course, this example can also be constructed such that there is a plurality of transmission paths, and such that coded image data 1, coded image data 2, error correction coded data and information related to these coded image data are transmitted using different transmission paths.

In this example, sessions for distributing coded image data 1, coded image data 2 and error correction coded data can be such that at least one is transmitted using a unicast method, or at least one is transmitted using a multicast method, or transmitted using a broadcast method.

Also, of course the function and processing of the distribution information transmission unit 702, session information management unit 703, image data storing/generation unit 704, coded image data 1 transmission unit 705, coded image data 2 transmission unit 706 and FEC coded data transmission unit 714 of the image data distribution device 701 can be performed by program control that is executed by a computer constituting an image data distribution device 701. Moreover, the function and processing of the session information reception unit 709, coded image data 1 reception unit 710, coded image data 2 reception unit 711, coded data reconstruction unit 712, decoder 713, and FEC coded data reception unit 715 of the image data reception device 708 can be performed by program control that is executed by a computer having an image data reception device 708.

### [Eighth Embodiment of the Invention]

In an eighth embodiment of the invention, the image data distribution device comprises: means for distributing moving image data, coded data for at least part of a frame of moving image data that has been coded in intra-macro-blocks and error correction coded data in different sessions, and means for setting routing priority control in the case of a transmission path, or setting power control in the case of a wireless transmission path for each session for distributing data. Also, the image data reception device comprises: means for receiving data that is distributed in at least one session, means for using error correction coded data to restore moving image data that was in error or lost in the transmission path, and means for selecting data from among the received moving image data based on image quality, and then reconstructing and decoding that data as single moving image data. Furthermore, construction is also possible in which a means is included for selecting whether or not to receive the data of at least one session based on at least one of the error/loss ratio of received data, the usable power of the reception device, and a pre-determined setting.

### [Example 8]

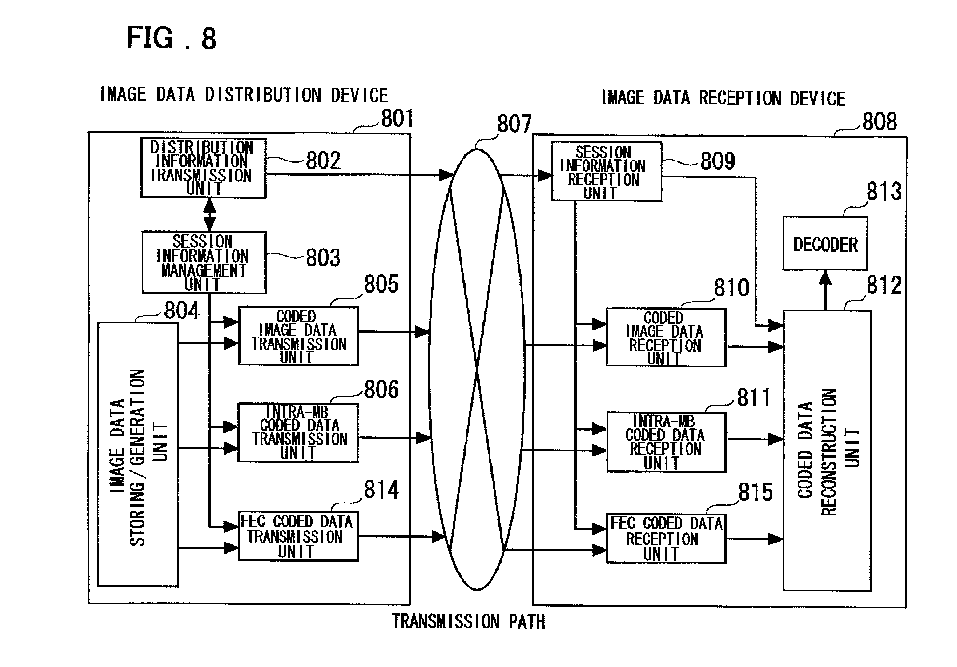

Next, this eighth example of the present invention will be explained with reference to the drawings. Fig. 8 is a drawing showing the construction of this eighth example of the invention. As shown in Fig. 8, this example comprises: an image data distribution device 801, an image data reception device 808, and a transmission path 807 for transmitting coded moving image data and error correction coded data, and these correspond to the image data distribution device 201, image data reception device 208 and transmission path 207 of the second example. Also, each of the elements 802 to 806 of the image data distribution device 801, and each of the elements 809 to 813 of the image data reception device 808 correspond to each of the elements 202 to 206 of the image data distribution device 201, and each of the elements 209 to 213 of the second example, respectively. Only the parts that differ from the second example will be explained below. In order to simplify the explanation of this example, the error correction coded data is presumed to be generated from the coded image data, and the number of error correction coded data generated from one coded data is presumed to be one, however, of course in the present invention, the number of error correction coded data is not limited to one.

The image data distribution device 801 comprises: a distribution information transmission unit 802, session information management unit 803, image data storing/generation unit 804, coded image data transmission unit 805, intra-macro-block (Intra-MB) coded data transmission unit 806 and FEC coded data transmission unit 814.

The image data reception device 808 comprises: a session information reception unit 809, coded image data reception unit 810, intra-macro-block (Intra-MB) coded data reception unit 811, coded data reconstruction unit 812, decoder 813 and FEC coded data reception unit 815.

The FEC method is the same as that used in the seventh embodiment.

In the image data distribution device 801, image data, which was
- stored (accumulated) in advance,
- coded and generated in real time, or
- converted and generated in real time from existing image data by the image data storing/generation unit 804, and error correction coded data that is generated from any of the coded image data above is transmitted by the coded image data transmission unit 805, intra-macro-block (Intra-MB) coded image data transmission unit 806 and FEC coded data transmission unit 814 via the transmission path 807 based on routing priority information for the transmission path 807 and/or power control information for a wireless transmission path for each session set by the session information management unit 803. The error correction code is the same as that in the seventh example.

The session information management unit 803 manages information related to the type of coded data and information related to the error correction coded data, and notifies the image data reception device 808 of that information by way of the distribution information transmission unit 802.

The FEC coded data transmission unit 814 has a function of adding information corresponding to RTP (for example, the sequence number of the RTP header) in order to be able to know which part of the coded image data the error correction coded data is for. Furthermore, it is also possible to assign a payload type and/or SRC and/or CSRC to indicate that the data is error correction coded data.

The image data reception device 808 receives information related to the type of coded data and information related to the error correction coded data from the image data distribution device 801 by way of the session information reception unit 809, and from this information knows the type of the data received from the transmission path 807.

Also, the session information management unit 803 sets at least one of the following:
- coding setting for coded data
- error correction code type
- error correction code setting (for example, check matrix data in LDPC code, or settings for generating this)
- coding option (used tool)
- payload option for coded data
- information corresponding to the payload type of the RTP header that identifies the coded data and error correction code, and
- information corresponding to SSRC or CSRC,
and then can notify the image data reception device 808 of this information by way of the distribution information transmission unit 802, or this information can be set in advance between the image data distribution device 801 and image data reception device 808.

When coded image data could not be received due to error or loss in the transmission path, the coded data reconstruction unit 812 uses the error correction coded data received by the FEC coded data reception unit 815 to restore the coded image data. The case in which it is possible to receive both coded image data and intra-macro-block coded data, including the restored and obtained coded image data, is the same as in the second example.

The method of optimizing the image quality of distributed image data according to the reception environment is also the same as in the second example; so that an image data reception device 808 having good reception environment is able to receive coded image data, intra-macro-block coded data and error correction coded data, and thus is able to reproduce higher quality and more stable moving image data. Also, since it is possible to control the routing priority of the transmission path, or transmission power for a wireless transmission path for each session for distributing the data, it is possible to perform distribution taking into consideration the network resources.

The case in which there is a plurality of error correction coded data is the same as in the seventh example.

The remainder of this example is the same as the second example.

This example can also be constructed such that there is a plurality of transmission paths, and such that coded image data, intra-macro coded data, error correction coded data and information related to these coded image data are transmitted using different transmission paths.

In this example, sessions for distributing coded image data, intra-macro-block coded data and error correction coded data can be such that at least one is transmitted using a unicast method, or at least one is transmitted using a multicast method, or transmitted using a broadcast method.

Also, of course the function and processing of the distribution information transmission unit 802, session information management unit 803, image data storing/generation unit 804, coded image data transmission unit 805, intra-macro-block coded data transmission unit 806 and FEC coded data transmission unit 814 of the image data distribution device 801 can be performed by program control that is executed by a computer constituting an image data distribution device 801. Moreover, the function and processing of the session information reception unit 809, coded image data reception unit 810, intra-macro-block coded data reception unit 811, coded data reconstruction unit 812, decoder 813, and FEC coded data reception unit 815 of the image data reception device 808 can be performed by program control that is executed by a computer constituting an image data reception device 808.

### [Ninth Embodiment of the Invention]

In a ninth embodiment of the present invention, the image data distribution device comprises: means for distributing I pictures and other pictures from among I pictures, P pictures, and when existing in the coding method used for coding moving image, B (Bi-directionally-predictive) pictures, of moving image data, each in a different session; means for distributing error correction coded data, and means for setting routing priority control for a transmission path or power control for a wireless transmission path for each session for distributing moving image data. The image data reception device comprises: means for receiving data distributed from at least one session, means for receiving error correction coded data, means for using error correction coded data to restore moving image data that was in error or lost in the transmission path, and means for reconstructing and decoding received moving image data into single moving image data. Furthermore, construction is also possible in which a means is included for selecting whether or not to receive the data of at least one session based on at least one of the error/loss ratio of received data, the usable power of the reception device, and a pre-determined setting.

### [Example 9]

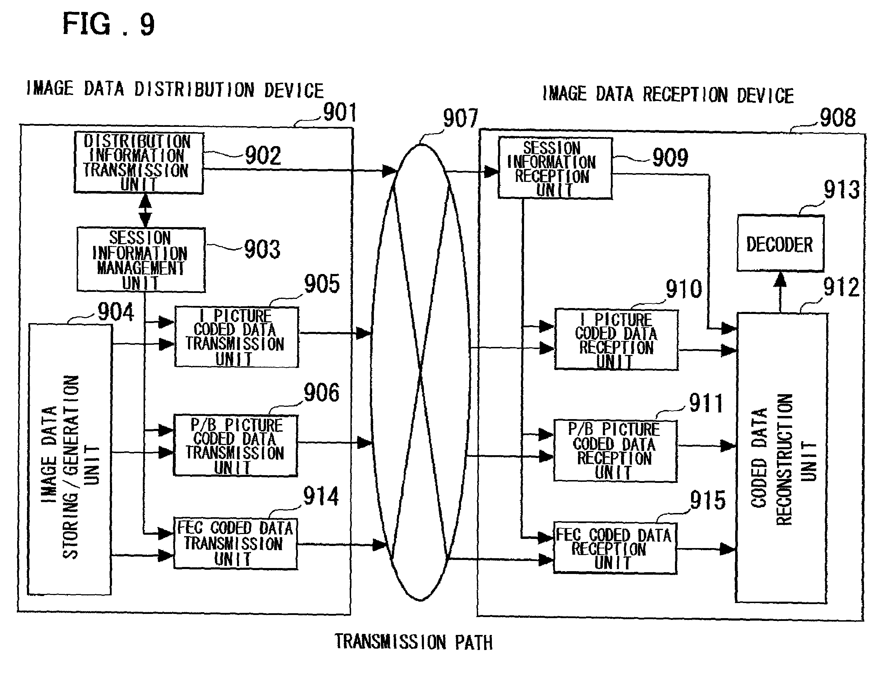

The ninth example of the present invention will be explained with reference to the drawings. Fig. 9 is a drawing showing the construction of this ninth example of the invention. As shown in Fig. 9, this example comprises: an image data distribution device 901, an image data reception device 908, and a transmission path 907 for transmitting coded image data and error correction coded data. These correspond to the image data distribution device 301, image data reception device 308 and transmission path 307 of the third example. Also, each of the elements 902 to 906 of the image data distribution device 901, and each of the elements 909 to 913 of the image data reception device 908 correspond to each of the elements 302 to 306 of the image data distribution device 301, and each of the elements 309 to 313 of the image data reception device 308, respectively. Only the parts that differ from the third example will be explained below. In order to simplify the explanation of this example, the error correction coded data is presumed to be generated from the I picture coded image data, however, of course it is possible to generate it from all of the picture coded data and distribute it in different sessions. Also, in order to simplify the explanation of this example, the number of error correction coded data generated from one coded data is presumed to be one, however, of course in the present invention, the number of error correction coded data is not limited to one.

The image data distribution device 901 comprises: a distribution information transmission unit 902, session information management unit 903, image data storing/generation unit 904, I picture coded data transmission unit 905, P/B picture coded data transmission unit 906 and FEC coded data transmission unit 914.

The image data reception device 908 comprises: a session information reception unit 909, I picture coded data reception unit 910, P/B picture coded data reception unit 911, coded data reconstruction unit 912, decoder 313 and FEC coded data reception unit 915.

The FEC method is the same as that used in the seventh example.

In the image data distribution device 901, image data, which was
- stored (accumulated) in advance,
- coded and generated in real time, or
- converted and generated in real time from existing image data by the image data storing/generation unit 904, and error correction coded data that was generated from any of the coded image data above is transmitted by the I picture coded data transmission unit 905, P/B picture coded data transmission unit 906 and FEC coded data transmission unit 914 via the transmission path 907 based on routing priority information for the transmission path 907 and/or power control information for a wireless transmission path for each session set by the session information management unit 903.

The session information management unit 903 manages picture information distributed from each session and error correction coded data, and notifies the image data reception device 908 of that information by way of the distribution information transmission unit 902.

The FEC coded data transmission unit 914 has a function of adding information corresponding to RTP (for example, the sequence number of the RTP header) in order to be able to know which part of the I picture coded data the error correction coded data is for. Furthermore, it is also possible to assign a payload type and/or SRC and/or CSRC to indicate that the data is error correction coded data.

The image data reception device 908 receives information related to image coding and information related to the error correction coded data from the image data distribution device 901 by way of the session information reception unit 909, and from this information knows the picture type of the image data received from the transmission path 907 and knows the type of coded data that is the object of the error correction coded data.

Also, the session information management unit 903 sets at least one of the following:
- coding setting for coded data
- error correction code type
- error correction code setting (for example, check matrix data in LDPC code, or settings for generating this)
- coding option (used tool)
- payload option for coded data
- information corresponding to the payload type of the RTP header that identifies the coded data and error correction code, and
- information corresponding to SSRC or CSRC,
   and then can notify the image data reception device 908 of this information by way of the distribution information transmission unit 902, or this information can be set in advance between the image data distribution device 901 and image data reception device 908.

When I picture coded data could not be received due to error or loss in the transmission path, the coded data reconstruction unit 912 uses the error correction coded data received by the FEC coded data reception unit 915 to restore the I picture coded data. Reconstructing the image data, including the restored and obtained I picture coded data, is the same as in the third example.

The method of optimizing the image quality of distributed image data according to the reception environment is also the same as in the third example; so that an image data reception device 908 having good reception environment is able to receive I picture coded data, P/B picture coded data and error correction coded data, and thus is able to reproduce higher quality and more stable moving image data. Also, since it is possible to control the routing priority of the transmission path, or transmission power for a wireless transmission path for each session for distributing the data, it is possible to perform distribution taking into consideration the network resources.

The case in which there is a plurality of error correction coded data is the same as in the seventh example.

The remainder of this embodiment is the same as the third example.

This example can also be constructed such that there is a plurality of transmission paths, and such that I picture coded data, P/B picture coded data, error correction coded data and information related to these coded image data are transmitted using different transmission paths.

In this example, sessions for distributing I picture coded data, P/B picture coded data and error correction coded data can be such that at least one is transmitted using a unicast method, or at least one is transmitted using a multicast method, or transmitted using a broadcast method.

Also, of course the function and processing of the distribution information transmission unit 902, session information management unit 903, image data storing/generation unit 904, I picture coded data transmission unit 905, P/B picture coded data transmission unit 906 and FEC coded data transmission unit 914 of the image data distribution device 901 can be performed by program control that is executed by a computer constituting an image data distribution device 901. Moreover, the function and processing of the session information reception unit 909, I picture coded data reception unit 910, P/B picture coded data reception unit 911, coded data reconstruction unit 912, decoder 913, and FEC coded data reception unit 915 of the image data reception device 908 can be performed by program control that is executed by a computer constituting an image data reception device 908.

### [Tenth Embodiment of the Invention]

In a tenth embodiment of the present invention, the image data distribution device comprises: means for distributing I/P pictures and other pictures from among I pictures, P pictures, and B pictures of moving image data, each in a different session; means for distributing error correction coded data and means for setting routing priority control for a transmission path or power control for a wireless transmission path for each session for distributing moving image data. The image data reception device comprises: means for receiving data distributed from at least one session, means for receiving error correction coded data, means for using error correction coded data to restore moving image data that was in error or lost in the transmission path, and means for reconstructing and decoding received moving image data into single moving image data. Furthermore, construction is also possible in which a means is included for selecting whether or not to receive the data of at least one session based on at least one of the error/loss ratio of received data, the usable power of the reception device, and a pre-determined setting.

### [Example 10]

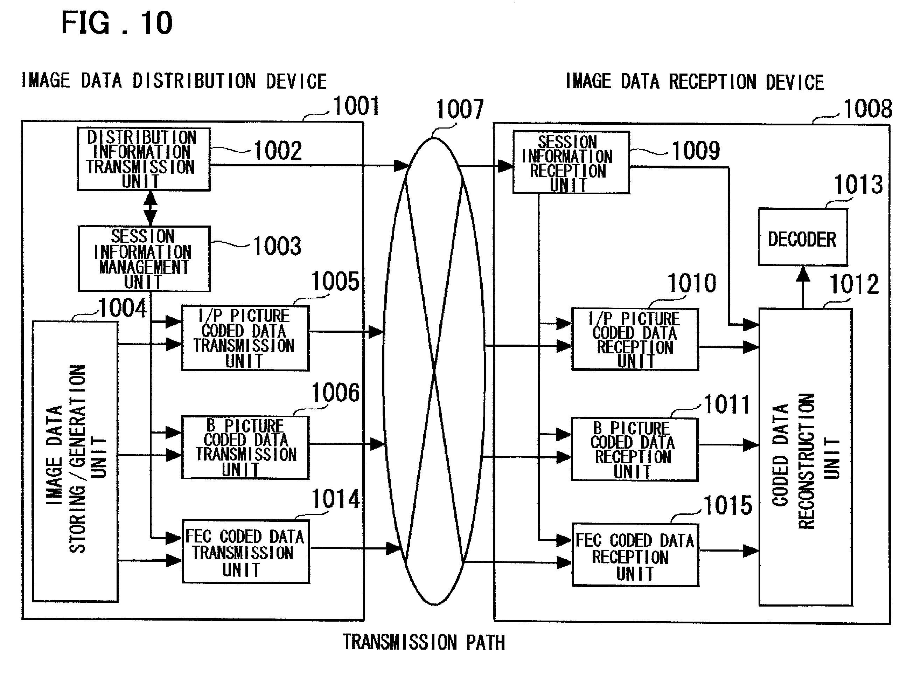

The tenth example of the present invention will be explained with reference to the drawings. Fig. 10 is a drawing showing the construction of this tenth example of the invention. As shown in Fig. 10, this example comprises: an image data distribution device 1001, an image data reception device 1008, and a transmission path 1007 for transmitting coded image data and error correction coded data. These correspond to the image data distribution device 401, image data reception device 408 and transmission path 407 of the fourth embodiment. Also, each of the elements 1002 to 1006 of the image data distribution device 1001, and each of the elements 1009 to 1013 of the image data reception device 1008 correspond to each of the elements 402 to 406 of the image data distribution device 401, and each of the elements 409 to 413 of the image data reception device 408, respectively. Mainly, only the parts that differ from the fourth example will be explained below. In order to simplify the explanation of this example, the error correction coded data is presumed to be generated from the I/B picture coded image data, however, of course it is possible to generate it from all of the picture coded data and distribute it in different sessions. Also, in order to simplify the explanation of this example, the number error correction coded data generated from one coded data is presumed to be one, however, of course in the present invention, the number of error correction coded data is not limited to one.

The image data distribution device 1001 comprises: a distribution information transmission unit 1002, session information management unit 1003, image data storing/generation unit 1004, I/P picture coded data transmission unit 1005, B picture coded data transmission unit 1006, and FEC coded data transmission unit 1014.

The image data reception device 1008 comprises: a session information reception unit 1009, I/P picture coded data reception unit 1010, B picture coded data reception unit 1011, coded data reconstruction unit 1012, decoder 1013 and FEC coded data reception unit 1015.

The FEC method is the same as that used in the seventh example.

In the image data distribution device 1001, image data, which was
- stored (accumulated) in advance,
- coded and generated in real time, or
- converted and generated in real time from existing image data by the image data storing/generation unit 1004, and error correction coded data that was generated from any of the coded image data above is transmitted by the I/P picture coded data transmission unit 1005, B picture coded data transmission unit 1006 and FEC coded data transmission unit 1014 via the transmission path 1007 based on routing priority information for the transmission path 1007 and/or power control information for a wireless transmission path for each session set by the session information management unit 1003.

The session information management unit 1003 manages picture information distributed from each session and error correction coded data, and notifies the image data reception device 1008 of that information by way of the distribution information transmission unit 1002.

The FEC coded data transmission unit 1014 has a function of adding information corresponding to RTP (for example, the sequence number of the RTP header) in order to be able to know which part of the I/P picture coded data the error correction coded data is for. Furthermore, it is also possible to assign a payload type and/or SRC and/or CSRC to indicate that the data is error correction coded data.

The image data reception device 1008 receives information related to image coding and information related to the error correction coded data from the image data distribution device 1001 by way of session information reception unit 1009, and from this information knows the picture type of the image data received from the transmission path 1007 and knows the type of coded data that is the object of the error correction coded data.

Also, the session information management unit 1003 sets at least one of the following:
- coding setting for coded data
- error correction code type
- error correction code setting (for example, check matrix data in LDPC code, or settings for generating this)
- coding option (used tool)
- payload option for coded data
- information corresponding to the payload type of the RTP header that identifies the coded data and error correction code, and
- information corresponding to SSRC or CSRC,
and then can notify the image data reception device 1008 of this information by way of the distribution information transmission unit 1002, or this information can be set in advance between the image data distribution device 1001 and image data reception device 1008.

When I/P picture coded data could not be received due to error or loss in the transmission path, the coded data reconstruction unit 1012 uses the error correction coded data received by the FEC coded data reception unit 1015 to restore the I/P picture coded data. Reconstructing the image data, including the restored and obtained I/P picture coded data, is the same as in the fourth example.

The method of optimizing the image quality of distributed image data according to the reception environment is also the same as in the fourth example; so that an image data reception device 1008 having good reception environment is able to receive I/P picture coded data, B picture coded data and error correction coded data, and thus is able to reproduce higher quality and more stable moving image data. Also, since it is possible to control the routing priority of the transmission path, or transmission power for a wireless transmission path for each session for distributing the data, it is possible to perform distribution taking into consideration the network resources.

The case in which there is a plurality of error correction coded data is the same as in the seventh example.

The remainder of this example is the same as the fourth example.

This example can also be constructed such that there is a plurality of transmission paths, and such that I/P picture coded data, B picture coded data, error correction coded data and information related to these coded image data are transmitted using different transmission paths.

In this example, sessions for distributing I/P picture coded data, B picture coded data and error correction coded data can be such that at least one is transmitted using a unicast method, or at least one is transmitted using a multicast method, or transmitted using a broadcast method.

Also, of course the function and processing of the distribution information transmission unit 1002, session information management unit 1003, image data storing/generation unit 1004, I/P picture coded data transmission unit 1005, B picture coded data transmission unit 1006 and FEC coded data transmission unit 1014 of the image data distribution device 1001 can be performed by program control that is executed by a computer constituting an image data distribution device 1001. Moreover, the function and processing of the session information reception unit 1009, I/P picture coded data reception unit 1010, B picture coded data reception unit 1011, coded data reconstruction unit 1012, decoder 1013 and FEC coded data reception unit 1015 of the image data reception device 1008 can be performed by program control that is executed by a computer constituting an image data reception device 1008.

### [Eleventh Embodiment of the Invention]

In an eleventh embodiment of the present invention, the image data distribution device comprises: means for distributing I pictures, P pictures and B pictures from among I pictures, P pictures, and B pictures of moving image data, each in a different session; means for distributing error correction coded data, and means for setting routing priority control for a transmission path or power control for a wireless transmission path for each session for distributing moving image data. The image data reception device comprises: means for receiving data distributed from at least one session, means for receiving error correction coded data, means for using error correction coded data to restore moving image data that was in error or lost in the transmission path, and means for reconstructing and decoding received moving image data into single moving image data. Furthermore, construction is also possible in which a means is included for selecting whether or not to receive the data of at least one session based on at least the error/loss ratio of received data, the usable power of the reception device, or a pre-determined setting.

### [Example 11]

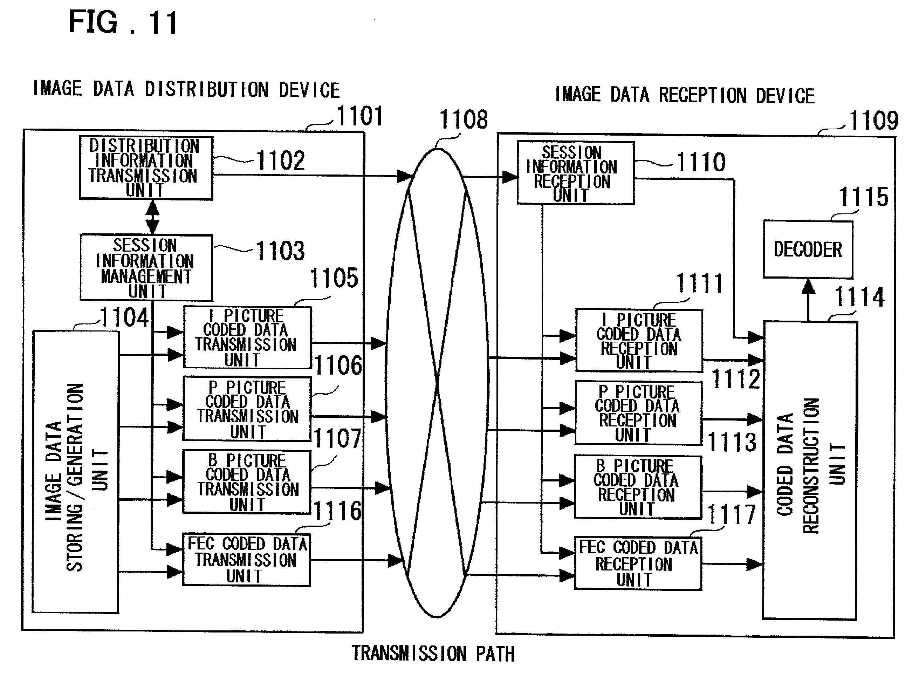

The eleventh example of the present invention will be explained with reference to the drawings. Fig. 11 is a drawing showing the construction of this eleventh example of the invention. As shown in Fig. 11, this example comprises: an image data distribution device 1101, an image data reception device 1109, and a transmission path 1108 for transmitting coded moving image data. These correspond to the image data distribution device 501, image data reception device 508 and transmission path 507 of the fifth example. Also, each of the elements 1102 to 1107 of the image data distribution device 1101, and each of the elements 1110 to 1115 of the image data reception device 1109 correspond to each of the elements 502 to 507 of the image data distribution device 501, and each of the elements 510 to 515 of the image data reception device 509, respectively. Only the parts that differ from the fifth example will be explained below. In order to simplify the explanation of this example, the error correction coded data is presumed to be generated from the I picture coded image data, however, of course it is possible to generate it from all of the picture coded data and distribute it in different sessions. Also, in order to simplify the explanation of this example, the number error correction coded data generated from one coded data is presumed to be one, however, of course in the present invention, the number of error correction coded data is not limited to one.

The image data distribution device 1101 comprises: a distribution information transmission unit 1102, session information management unit 1103, image data storing/generation unit 1104, I picture coded data transmission unit 1105, P picture coded data transmission unit 1106, B picture coded data transmission unit 1107 and FEC coded data transmission unit 1116.

The image data reception device 1109 comprises: a session information reception unit 1110, I picture coded data reception unit 1111, P picture coded data reception unit 1112, B picture coded data reception unit 1113, coded data reconstruction unit 1114, decoder 1115 and FEC coded data reception unit 1117.

The FEC method is the same as that used in the seventh example.

In the image data distribution device 1101, image data, which was
- stored (accumulated) in advance,
- coded and generated in real time, or
- converted and generated in real time from existing image data by the image data storing/generation unit 1104, and error correction coded data that was generated from any of the coded image data above is transmitted by the I picture coded data transmission unit 1105, P picture coded data transmission unit 1106 B picture coded data transmission unit 1107 and FEC coded data transmission unit 1116 via the transmission path 1108 based on routing priority information for the transmission path 1108 and/or power control information for a wireless transmission path for each session set by the session information management unit 1103.

The session information management unit 1103 manages picture information distributed from each session and error correction coded data, and notifies the image data reception device 1109 of that information by way of the distribution information transmission unit 1102.

The FEC coded data transmission unit 1116 has a function of adding information corresponding to RTP (for example, the sequence number of the RTP header) in order to be able to know which part of the I picture coded data the error correction coded data is for. Furthermore, it is also possible to assign a payload type and/or SRC and/or CSRC to indicate that the data is error correction coded data.

The image data reception device 1109 receives information related to image coding and information related to the error correction coded data from the image data distribution device 1101 by way of session information reception unit 1110, and from this information knows the picture type of the image data received from the transmission path 1108 and knows the type of coded data that is the object of the error correction coded data.

Also, the session information management unit 1103 sets at least one of the following:
- coding setting for coded data
- error correction code type
- error correction code setting (for example, check matrix data in LDPC code, or settings for generating this)
- coding option (used tool)
- payload option for coded data
- information corresponding to the payload type of the RTP header that identifies the coded data and error correction code, and
- information corresponding to SSRC or CSRC,
   and then can notify the image data reception device 1109 of this information by way of the distribution information transmission unit 1102, or this information can be set in advance between the image data distribution device 1101 and image data reception device 1109.

When I picture coded data could not be received due to error or loss in the transmission path, the coded data reconstruction unit 1114 uses the error correction coded data received by the FEC coded data reception unit 1117 to restore the I picture coded data. Reconstructing the image data, including the restored and obtained I picture coded data, is the same as in the fifth example.

The method of optimizing the image quality of distributed image data according to the reception environment is also the same as in the fifth example; so that an image data reception device 1109 having good reception environment is able to receive I picture coded data, P picture coded data, B picture coded data and error correction coded data, and thus is able to reproduce higher quality and more stable moving image data. Also, since it is possible to control the routing priority of the transmission path, or transmission power for a wireless transmission path for each session for distributing the data, it is possible to perform distribution taking into consideration the network resources.

Also, the case in which there is a plurality of error correction coded data is the same as in the seventh example.

The remainder of this embodiment is the same as the fifth example.

This example can also be constructed such that there is a plurality of transmission paths, and such that I picture coded data, P picture coded data, B picture coded data, error correction coded data and information related to these coded image data are transmitted using different transmission paths.

In this example, sessions for distributing I picture coded data, P picture coded data, B picture coded data and error correction coded data can be such that at least one is transmitted using a unicast method, or at least one is transmitted using a multicast method, or transmitted using a broadcast method.

Also, of course the function and processing of the distribution information transmission unit 1102, session information management unit 1103, image data storing/generation unit 1104, I picture coded data transmission unit 1105, P picture coded data transmission unit 1106, B picture coded data transmission unit 1107 and FEC coded data transmission unit 1116 of the image data distribution device 1101 can be performed by program control that is executed by a computer constituting an image data distribution device 1101. Moreover, the function and processing of the session information reception unit 1110, I picture coded data reception unit 1111, P picture coded data reception unit 1112, B picture coded data reception unit 1113, coded data reconstruction unit 1114, decoder 1115 and FEC coded data reception unit 1117 of the image data reception device 1109 can be performed by program control that is executed by a computer constituting an image data reception device 1109.

### [Twelfth Embodiment of the Invention]

In a twelfth embodiment of the present invention, the image data distribution device comprises: means for distributing, I picture coded data, P picture coded data, and when existing in the coding method of coding moving images, B picture coded data of moving image data, and coded data for that frame of moving image data, for which at least part is coded in intra-macro blocks (Intra-MB), each in a different session; means for distributing error correction coded data and means for setting routing priority control for a transmission path or power control for a wireless transmission path for each session for distributing moving image data. The image data reception device comprises: means for receiving data distributed from at least one session, means for receiving error correction coded data, means for using error correction coded data to restore moving image data that was in error or lost in the transmission path, and means for selecting data from among the received moving image data based on image quality, and reconstructing and decoding it into single moving image data. Furthermore, construction is also possible in which a means is included for selecting whether or not to receive the data of at least one session based on at least one of the error/loss ratio of received data, the usable power of the reception device, and a pre-determined setting.

### [Example 12]

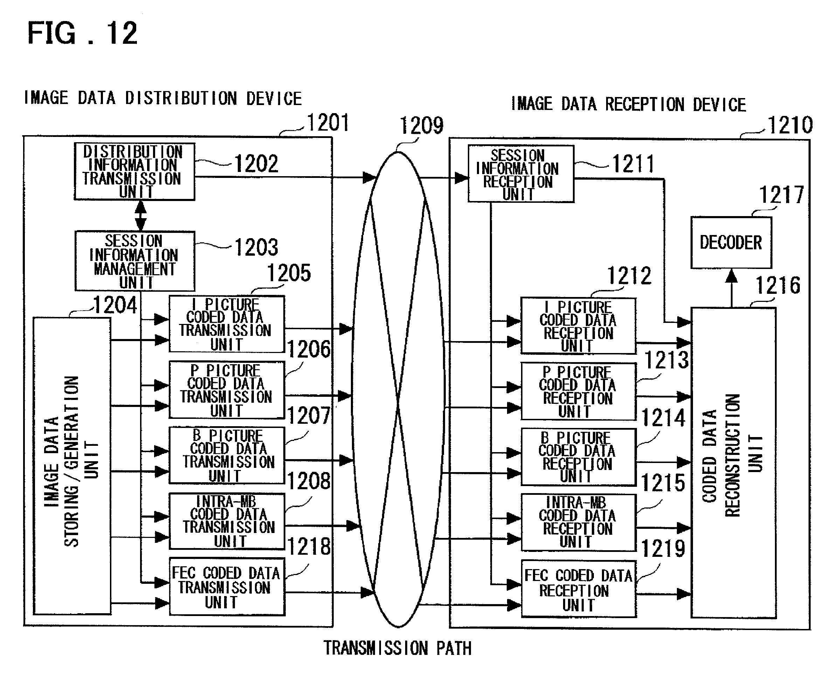

The twelfth example of the present invention will be explained with reference to the drawings. Fig. 12 is a drawing showing the construction of this twelfth example of the invention. As shown in Fig. 12, this example comprises: an image data distribution device 1201, an image data reception device 1210, and a transmission path 1209 for transmitting coded image data.

These correspond to the image data distribution device 601, image data reception device 610 and transmission path 609 of the sixth example. Also, each of the elements 1202 to 1208 of the image data distribution device 1201, and each of the elements 1211 to 1217 of the image data reception device 1210 correspond to each of the elements 602 to 608 of the image data distribution device 601, and each of the elements 611 to 617 of the image data reception device 610, respectively. Only the parts that differ from the sixth example will be explained below. In order to simplify the explanation of this example, the error correction coded data is presumed to be generated from the I picture coded image data, however, of course it is possible to generate it from all of the picture coded data and/or intra-macro-block coded data and distribute it in different sessions. Also, in order to simplify the explanation of this example, the number error correction coded data generated from one coded data is presumed to be one, however, of course in the present invention, the number of error correction coded data is not limited to one.

The image data distribution device 1201 comprises: a distribution information transmission unit 1202, session information management unit 1203, image data storing/generation unit 1204, I picture coded data transmission unit 1205, P picture coded data transmission unit 1206, B picture coded data transmission unit 1207, intra-macro-block (Intra-MB) coded data transmission unit 1208 and FEC coded data transmission unit 1218.

The image data reception device 1210 comprises: a session information reception unit 1211, I picture coded data reception unit 1212, P picture coded data reception unit 1213, B picture coded data reception unit 1214, intra-macro-block (Intra-MB) coded data reception unit 1215, coded data reconstruction unit 1216, decoder 1217, and FEC coded data reception unit 1219.

The FEC method is the same as that used in the seventh example.

In the image data distribution device 1201, image data, which was
- stored (accumulated) in advance,
- generated in real time, or
- converted and generated in real time from existing image data by the image data storing/generation unit 1204, and error correction coded data that was generated from any of the coded image data above is transmitted by the I picture coded data transmission unit 1205, P picture coded data transmission unit 1206 B picture coded data transmission unit 1207, Intra-MB coded data transmission unit 1208 and FEC coded data transmission unit 1218 via the transmission path 1209 based on routing priority information for the transmission path 1209 and/or power control information for a wireless transmission path for each session set by the session information management unit 1203.

The session information management unit 1103 manages picture information distributed from each session and error correction coded data, and notifies the image data reception device 1210 of that information by way of the distribution information transmission unit 1202.

The FEC coded data transmission unit 1218 has a function of adding information corresponding to RTP (for example, the sequence number of the RTP header) in order to be able to know which part of the I picture coded data the error correction coded data is for. Furthermore, it is also possible to assign a payload type and/or SRC and/or CSRC to indicate that the data is error correction coded data.

The image data reception device 1210 receives information related to image coding and information related to the error correction coded data from the image data distribution device 1201 by way of session information reception unit 1211, and from this information knows the picture and block type of the image data received from the transmission path 1209, and knows the type of coded data that is the object of the error correction coded data.

Also, the session information management unit 1203 sets at least one of the following:
- coding setting for coded data
- error-correction code type
- error-correction code setting (for example, check matrix data in LDPC code, or settings for generating this)
- coding option (used tool)
- payload option for coded data
- information corresponding to the payload type of the RTP header that identifies the coded data and error correction code, and
- information corresponding to SSRC or CSRC,
   and then can notify the image data reception device 1210 of this information by way of the distribution information transmission unit 1202, or this information can be set in advance between the image data distribution device 1201 and image data reception device 1210.

When I picture coded data could not be received due to error or loss in the transmission path, the coded data reconstruction unit 1216 uses the error correction coded data received by the FEC coded data reception unit 1219 to restore the I picture coded data. Reconstructing the image data, including the restored and obtained I picture coded data, is the same as in the sixth example.

The method of optimizing the image quality of distributed image data according to the reception environment is also the same as in the sixth example; so that an image data reception device 1210 having good reception environment is able to receive I picture coded data, P picture coded data, B picture coded data, intra-macro-block coded data and error correction coded data, and thus is able to reproduce higher quality and more stable moving image data. Also, since it is possible to control the routing priority of the transmission path, or transmission power for a wireless transmission path for each session for distributing the data, it is possible to perform distribution taking into consideration the network resources.

Also, the case in which there is a plurality of error correction coded data is the same as in the seventh example.

The remainder of this embodiment is the same as the sixth example.

This example can also be constructed such that there is a plurality of transmission paths, and such that I picture coded data, P picture coded data, B picture coded data, intra macro block coded data, error correction coded data and information related to these coded image data are transmitted using different transmission paths.

In this example, sessions for distributing I picture coded data, P picture coded data, B picture coded data, intra-macro-block coded data and error correction coded data can be such that at least one is transmitted using a unicast method, or at least one is transmitted using a multicast method, or transmitted using a broadcast method.

Also, of course the function and processing of the distribution information transmission unit 1202, session information management unit 1203, image data storing/generation unit 1204, I picture coded data transmission unit 1205, P picture coded data transmission unit 1206, B picture coded data transmission unit 1207, intra-macro-block coded data transmission unit 1208 and FEC coded data transmission unit 1218 of the image data distribution device 1201 can be performed by program control that is executed by a computer constituting an image data distribution device 1201. Moreover, the function and processing of the session information reception unit 1211, I picture coded data reception unit 1212, P picture coded data reception unit 1213, B picture coded data reception unit 1214, intra-macro-block coded data reception unit 1215, coded data reconstruction unit 1216, decoder 1217 and FEC coded data reception unit 1219 of the image data reception device 1210 can be performed by program control that is executed by a computer constituting an image data reception device 1210.

The preferred embodiments of the present invention have been explained above, however, of course this invention is not limited to just the construction of the embodiments described above, and it includes any variations or modifications that are possible by someone skilled in the art within the scope of the invention of any of the patent claims.

## Claims

1. An image data distribution device comprising:
means for selecting a session for distributing coded image data according to the image quality when distributing a plurality of coded image data for the same image; and
means for distributing said coded image data in the selected session.

2. An image data distribution device comprising:
means for selecting a session for distributing coded image data according to the image quality when distributing a plurality of coded image data for the same image; and
means for performing routing priority control for the transmission path, and/or power control for a wireless transmission path for each of at least one selected session.

3. An image data distribution device comprising:
means for selecting a session for distributing coded image data to be distributed based on the type of image frame and/or image block; and
means for distributing said coded image data in the selected session.

4. An image data distribution device comprising:
means for selecting a session for distributing coded image data to be distributed based on the type of image frame and/or image block; and
means for performing routing priority control for the transmission path, and/or power control for a wireless transmission path for each of at least one selected session.

5. The image data distribution device of claim 1 or claim 2 wherein said plurality of coded image data for the same image is coded using the same coding method and has the same frame configuration.

6. An image reception device comprising:
means for receiving at least one coded moving image data that is distributed from an image data distribution device;
means for selecting data from properly received coded data based on the image quality, and
means for decoding the selected data.

7. An image data distribution system comprising:
an image data distribution device that distributes image data, and
at least one image data reception device that receives image data that is distributed from said image data distribution device; and wherein
said image data distribution device comprises:
means for selecting a session for distributing a plurality of coded image data for the same image based on the image quality of each; and
means for distributing said coded image data in the selected session.

8. An image data distribution system comprising:
an image data distribution device that distributes image data, and
at least one image data reception device that receives image data that is distributed from said image data distribution device; wherein
said image data distribution device comprises:
means for selecting a session for distributing a plurality of coded image data for the same image based on the image quality of each; and
means for performing routing priority control for the transmission path, and/or power control for a wireless transmission path for each of at least one selected session.

9. An image data distribution system comprising:
an image data distribution device that distributes image data, and
at least one image data reception device that receives image data that is distributed from said image data distribution device; wherein
said image data distribution device comprises:
means for selecting a session for distributing coded image data to be distributed based on the type of image frame and/or image block; and
means for distributing said coded image data in the selected session.

10. An image data distribution system comprising:
an image data distribution device that distributes image data, and
at least one image data reception device that receives image data that is distributed from said image data distribution device; wherein
said image data distribution device comprises:
means for selecting a session for distributing coded image data to be distributed based on the type of image frame and/or image block; and
means for performing routing priority control for the transmission path, and/or power control for a wireless transmission path for each of at least one selected session.

11. The image data distribution system of claim 7 or claim 8 wherein said plurality of coded image data for the same image is coded using a same coding method and has the same frame configuration.

12. An image data distribution system comprising:
an image data distribution device that distributes image data, and
at least one image data reception device that receives image data that is distributed from said image data distribution device; wherein
said image reception device comprises:
means for receiving at least one coded moving image data that is distributed from said image data distribution device;
means for selecting data from properly received coded data based on the image quality, and
means for decoding the selected data.

13. An image data distribution control method that is a control method of controlling distribution of image data from an image data distribution device to at least one image data reception device, and comprising:
a step of, by said image data distribution device, selecting a session for distributing coded image data based on the image quality when distributing a plurality of coded image data for the same image; and
a step of, by said image data distribution device, distributing said coded image data in the selected session.

14. An image data distribution control method that is a control method of controlling distribution of image data from an image data distribution device to at least one image data reception device, and comprising:
a step of, by said image data distribution device, selecting a session for distributing coded image data based on the image quality when distributing a plurality of coded image data for the same image; and
a step of, by said image data distribution device, performing routing priority control for the transmission path, and/or power control for a wireless transmission path for each of at least one selected session.

15. An image data distribution control method that is a control method for distributing image data from an image data distribution device to at least one image data reception device, the method comprising:
a step of, by said image data distribution device, selecting a session for distributing coded image data based on the type of image frame and/or image block when distributing coded image data; and
a step of, by said image data distribution device, distributing coded image data in the selected session.

16. An image data distribution control method that is a control method for distributing image data from an image data distribution device to at least one image data reception device, the method comprising:
a step of, by said image data distribution device, selecting a session for distributing coded image data based on the type of image frame and/or image block when distributing coded image data; and
a step of performing routing priority control for the transmission path or power control for a wireless transmission path for each of at least one session selected according to the image quality.

17. The image data distribution control method of claim 13 or 14 wherein said plurality of coded image data for the same image is coded using the same coding method and has the same frame configuration.

18. An image data distribution control method that is a control method for distributing image data from an image data distribution device to at least one image data reception device, the method comprising:
a step of, by said image data reception device, receiving at least one coded moving image data that is distributed from said image data distribution device;
a step of, by said image data reception device, selecting data from among properly received coded data based on the image quality; and
a step of, by said image data reception device, decoding the selected data.

19. A program that causes a computer comprising an image data distribution device to execute:
a step of selecting a session for distributing coded image data based on the image quality of each when distributing a plurality of coded image data for the same image; and
a step of distributing the coded image data in the selected session.

20. A program that causes a computer comprising an image data distribution device to execute:
a step of selecting a session for distributing coded image data based on the image quality of each when distributing a plurality of coded image data for the same image; and
a step of performing routing priority control for the transmission path and/or power control for a wireless transmission path for each of at least one selected session.

21. A program that causes a computer comprising an image data distribution device to execute:
a step of selecting a session for distributing coded image data based on the type of image frame and/or image block when distributing coded image data; and
a step of distributing the coded image data in the selected session.

22. A program that causes a computer comprising an image data distribution device to execute:
a step of selecting a session for distributing coded image data based on the type of image frame and/or image block when distributing coded-image data; and
a step of performing routing priority control for the transmission path and/or power control for a wireless transmission path for each of at least one selected session.

23. A program that causes a computer comprising an image data reception device that receives data from an image data distribution device to execute:
a step of receiving at least one coded image data that is distributed from said image data distribution device;
a step of selecting data from among properly received coded data; and
a step of decoding selected data.

24. An image data distribution system comprising:
an image data distribution device;
at least one image data reception device; and
a transmission path for transmitting information from said image data distribution device to said image data reception device; and wherein
said image data distribution device comprises:
means for distributing a plurality of coded moving image data of the same image having different image quality each in a different session; and
means for setting routing priority control for the transmission path, and/or power control for a wireless transmission path for each session for distributing moving image data; and
said image data reception device comprises:
means for receiving coded moving image data that is distributed from said image data distribution device in at least one session;
means for selecting data from among received coded moving image data based on the image quality, and reconstructing that data into single moving image data; and
means for decoding the reconstructed coded data.

25. An image data distribution system comprising:
an image data distribution device;
at least one image data reception device; and
a transmission path for transmitting information from said image data distribution device to said image data reception device; wherein
said image data distribution device comprises:
means for distributing coded moving image data and coded data, which is data for at least part of a frame of coded moving image data that has been coded into intra-macro-blocks, each in a different session; and
means for setting routing priority control for the transmission path, and/or power control for a wireless transmission path for each session for distributing moving image data; and
said image data reception device comprises:
means for receiving coded moving image data that is distributed from said image data distribution device in at least one session;
means for selecting data from among received coded moving image data based on the image quality, and reconstructing that data into single moving image data; and
means for decoding the reconstructed coded data.

26. An image data distribution system comprising:
an image data distribution device;
at least one image data reception device; and
a transmission path for transmitting information from said image data distribution device to said image data reception device; wherein
said image data distribution device comprises:
means for distributing I pictures and other pictures from among I (Intra) pictures, P (Predictive) pictures, and when existing in the coding method using coded moving images, B (Bi-directionally-predictive) pictures of moving image data, each in different sessions; and
means for setting routing priority control for the transmission path, and/or power control for a wireless transmission path for each session for distributing coded moving image data; and
said image data reception device comprises:
means for receiving coded moving image data distributed from said image data distribution device in at least one session;
means for reconstructing received coded moving image data into single coded moving image data; and
means for decoding the reconstructed coded data.

27. An image data distribution system comprising:
an image data distribution device;
at least one image data reception device; and
a transmission path for transmitting information from said image data distribution device to said image data reception device; wherein
said image data distribution device comprises:
means for distributing I/P pictures and other pictures from among I (Intra) pictures, P (Predictive) pictures and B (Bi-directionally-predictive) pictures of moving image data, each in different sessions; and
means for setting routing priority control for the transmission path, and/or power control for a wireless transmission path for each session for distributing coded moving image data; and
said image data reception device comprises:
means for receiving coded moving image data distributed from said image data distribution device in at least one session;
means for reconstructing received coded moving image data into single coded moving image data; and
means for decoding the reconstructed coded data.

28. An image data distribution system comprising:
an image data distribution device;
at least one image data reception device; and
a transmission path for transmitting information from said image data distribution device to said image data reception device; and wherein
said image data distribution device comprises:
means for distributing I (Intra) pictures, P (Predictive) pictures, and B (Bi-directionally-predictive) pictures of moving image data, each in different sessions; and
means for setting routing priority control for the transmission path, and/or power control for a wireless transmission path for each session for distributing coded moving image data; and
said image data reception device comprises:
means for receiving coded moving image data distributed from said image data distribution device in at least one session;
means for reconstructing received coded moving image data into single coded moving image data; and
means for decoding the reconstructed coded data.

29. An image data distribution system comprising:
an image data distribution device;
at least one image data reception device; and
a transmission path for transmitting information from said image data distribution device to said image data reception device; wherein
said image data distribution device comprises:
means for distributing I (Intra) pictures, P (Predictive) pictures, and when existing in the coding method using coded moving images, B (Bi-directionally-predictive) pictures of moving image data, and coded data, which is data for at least part of a frame of coded moving image data that has been coded into intra-macro-blocks (Intra MB), each in different sessions; and
means for setting routing priority control for the transmission path, and/or power control for a wireless transmission path for each session for distributing coded moving image data; and
said image data reception device comprises:
means for receiving coded moving image data distributed from said image data distribution device in at least one session;
means for selecting data from the received coded moving image data, and reconstructing that data into single coded moving image data; and
means for decoding the reconstructed coded data.

30. The image data distribution system of any one of the claims 24 to 29 wherein;
said image data reception device acquires the type of coded information of the received data based on session information sent from said image data distribution device.

31. The image data distribution system of any one of the claims 24 to 29 wherein;
said image data distribution device transmits said coded data and/or session information each in different sessions over the transmission path.

32. An image data distribution device comprising:
means for selecting a plurality of sessions for distributing coded image data; and
means for distributing said coded image data in the selected session.

33. An image data distribution device comprising:
means for selecting a plurality of sessions for distributing coded image data; and
means for performing routing priority control for the transmission path, and/or power control for a wireless transmission path for each of at least one selected session.

34. The image data distribution device of claim 32 or claim 33 wherein said plurality of coded image data for the same image is coded using the same coding method, and has the same frame configuration.

35. The image data distribution device of claim 5 or claim 34 wherein each transmission unit of said plurality of coded image data for the same image is coded data for the same position in the same frame.

36. The image data distribution device of any one of the claims 1 to 4, and claims 32 to 35 comprising means for controlling distribution such that there is a time difference between said plurality of coded image data for the same image.

37. The image data distribution device of any one of the claims 1 to 5, and claims 32 to 36 further comprising:
means for selecting a session for distributing error correction coded data; and
means for distributing error correction coded data in the selected session.

38. The image data distribution device of any one of the claims 1 to 5, and claims 32 to 36 further comprising:
means for selecting a session for distributing error correction coded data; and
means for performing routing priority control for the transmission path, and/or power control for a wireless transmission path for each of at least one selected session.

39. The image data distribution device of any one of the claims 1 to 4, and claims 32 to 38 wherein at least one of said sessions for distribution is transmitted by multicast or broadcast.

40. An image data reception device comprising:
means for receiving at least one coded image data that is distributed from an image data distribution device;
means for selecting whether or not to receive at least one coded image data based on at least the error/loss ratio of the received data, usable power or a predetermined setting;
means for selecting data from among properly received coded data based on the image quality; and
means for decoding the selected data.

41. The image data reception device of claim 6 further comprising:
means for receiving at least one error correction coded data distributed from said image data distribution device; and
means for restoring data using the error correction coded data when there is error or loss in the received data.

42. The image data reception device of claim 40 further comprising:
means for receiving at least one error correction coded data distributed from said image data distribution device;
means for restoring data using the error correction coded data when there is error or loss in the received data; and
means for selecting whether or not to receive at least one error correction coded data based on at least the error/loss ratio of the received data, usable power or a predetermined setting.

43. The image data reception device of claim 41 or claim 42 further comprising means for selecting the optimum error correction coded data for restoring errors or loss according to the reception conditions of the received data when said image data reception device received said plurality of error correction coded data.

44. An image data distribution system comprising:
an image data distribution device that distributes image data; and
at least one image data reception device that receives image data distributed from said image data distribution device; wherein
said image data distribution device comprises:
means for selecting a plurality of sessions for distributing coded image data; and
means for distributing said coded image data in the selected sessions.

45. An image data distribution system comprising:
an image data distribution device that distributes image data; and
at least one image data reception device that receives image data distributed from said image data distribution device; wherein
said image data distribution device comprises:
means for selecting a plurality of sessions for distributing coded image data; and
means for performing routing priority control for the transmission path, and/or power control for a wireless transmission path for each of at least one selected session.

46. The image data distribution system of claim 44 or claim 45 wherein said plurality of coded image data for the same image is coded using the same coding method and has the same frame configuration.

47. The image data distribution system of claim 11 or claim 46 wherein each transmission unit of said plurality of coded image data for the same image is coded data for the same position in the same frame.

48. The image data distribution device of any one of the claims 7 to 11, and claims 44 to 47 comprising means for controlling distribution such that said plurality of coded image data for the same image is distributed with a time difference.

49. The image data distribution system of any one of the claims 7 to 11 wherein said image data distribution device notifies said image data reception device of at least:
(A1) type of said coded image data, and/or image quality of said coded image data, and/or coding setting for said coded image data;
(A2) type of said image frame and/or image block; or
(A3) said time difference.

50. The image data distribution system of any one of the claims 7 to 11, and 44 to 49 wherein said image data distribution device further comprises means for selecting at least one session for distributing error correction coded data.

51. The image data distribution system of any one of the claims 7 to 11, and claims 44 to 49 wherein at least one of said distribution session is transmitted by a multicast or broadcast.

52. An image data distribution system comprising:
an image data distribution device that distributes image data; and
at least one image data reception device that receives image data distributed from said image data distribution device; wherein
said image data reception device comprises:
means for receiving at least one coded image data that is distributed from said image data distribution device;
means for selecting whether or not to receive at least one coded image data based on at least the error/loss ratio of the received data, usable power or a predetermined setting;
means for selecting data from among properly received coded data based on the image quality; and
means for decoding the selected data.

53. The image data distribution system of claim 12 or claim 52 wherein said image data reception device further comprises:
means for receiving at least one error correction coded data distributed from said image data distribution device; and
means for restoring data using the error correction coded data when there is error or loss in the received data.

54. The image data distribution system of claim 12 or claim 52 wherein said image data reception device further comprises:
means for receiving at least one error correction coded data distributed from said image data distribution device;
means for restoring data using the error correction coded data when there is error or loss in the received data; and
means for selecting whether or not to receive at least one error correction coded data based on at least the error/loss ratio of the received data, usable power or a predetermined setting.

55. The image data distribution system of claim 53 or claim 54 wherein said image data reception device further comprises means for selecting the optimum error correction coded data for restoring errors or loss according to the reception conditions of the received data when said image data reception device received said plurality of error correction coded data.

56. An image data distribution control method that is a method of controlling distribution of image data from an image data distribution device to at least one image data reception device and comprising:
a step of, by said image data distribution device, selecting a plurality of sessions that distribute coded image data; and
a step of, by said image data distribution device, distributing said coded image data in the selected sessions.

57. An image data distribution control method that is a method of controlling distribution of image data from an image data distribution device to at least one image data reception device and comprising:
a step of, by said image data distribution device, selecting a plurality of sessions that distribute coded image data; and
a step of, by said image data distribution device, performing routing priority control for the transmission path, and/or power control for a wireless transmission path for each of at least one selected session.

58. The image data distribution control method of claim 17 wherein each transmission unit of said plurality of coded image data for the same image is coded data for the same position in the same frame.

59. The image data distribution control method of any one of the claims 13 to 18, and claims 56 to 58 distributes said plurality of coded image data for the same image such that there is a time difference.

60. The image data distribution control method of any one of the claims 13 to 18, and claims 56 to 59 wherein said image data distribution device notifies said image data reception device of at least:
(A1) type of said coded image data, and/or image quality of said coded image data, and/or coding setting for said coded image data;
(A2) type of said image frame and/or image block; or
(A3) said time difference.

61. The image data distribution control method of any one of the claims 13 to 18, and 56 to 60 further comprising:
a step of selecting a session for distributing error correction coded data; and
a step of distributing error correction coded data in the selected session.

62. The image data distribution control method of any one of the claims 13 to 18, and claims 56 to 60 further comprising:
a step of selecting a session for distributing error correction coded data; and
a step of performing routing priority control of the transmission path, and/or power control of a wireless transmission path for each of at least one selected session.

63. The image data distribution control method of claim 61 or 62 wherein said image-data-distribution device notifies said image-data-reception device of the type of said error correction coded data and/or coding setting for generating said error correction coded data.

64. The image data distribution control method of any one of the claims 13 to 18, and claims 56 to 62 comprising a step of transmitting at least one said distribution session by multicast or broadcast.

65. An image data distribution control method that is a method of controlling the distribution of image data from the image data distribution device to at least one image data reception device, and comprising:
a step of, by said image data reception device, receiving at least one coded image data that is distributed from said image data distribution device;
a step of, by said image data reception device, selecting whether or not to receive at least one coded image data based on at least the error/loss ratio of received data, usable power, or a predetermined setting;
a step of, by said image data reception device, selecting data from among properly received coded data based on the image quality; and
a step of, by said image data reception device, decoding the selected data.

66. The image data distribution control method of claim 18 or claim 65 further comprising:
a step of, by said image data reception device, receiving at least one coded image data that is distributed from said image data distribution device; and
a step of, by said image data reception device, restoring that data using error correction coded data when there is error/loss in the received data.

67. The image data distribution control method of claim 18 or claim 65 further comprising:
a step of, by said image data reception device, receiving at least one coded image data that is distributed from said image data distribution device;
a step of, by said image data reception device, restoring that data using error correction coded data when there is error/loss in the received data; and
a step of, by said image data reception device, selecting whether or not to receive at least one coded image data based on at least one of the error/loss ratio of received data, usable power and a predetermined setting.

68. The image data distribution control method of claim 66 or claim 67 further comprising a step whereby said image data reception device selects the optimum error correction coded data for restoring errors or loss according to the reception conditions of the received data when said image data reception device received said plurality of error correction coded data.

69. A program that causes a computer that constitutes an image data distribution device to execute the steps comprising:
selecting a plurality of sessions for distributing coded image data; and
distributing coded image data in the selected sessions.

70. A program that causes a computer that constitutes an image data distribution device to execute the steps comprising:
selecting a plurality of sessions for distributing coded image data; and
performing routing priority control of the transmission path, and/or power control for a wireless transmission path for each of at least one selected session.

71. The program of any one of the claims 19, 20, 69 or 79 wherein said plurality of coded image data for the same image is coded using the same coding method, and has the same frame configuration.

72. The program of claim 71 wherein each transmission unit of said plurality of coded image data for the same image is coded data for the same position in the same frame.

73. The program of any one of the claims 19, 20, 69 or 72 that causes said computer to execute:
a step of distributing said plurality of coded image data for the same image such that there is a time difference.

74. The program of any one of the claims 19 to 23, and claims 69 to 73 that causes said computer to execute the steps of:
selecting a session for distributing error correction coded data; and
distributing error correction coded data in the selected session.

75. The program of any one of the claims 19 to 23, and claims 69 to 73 that causes said computer to execute the steps of:
selecting a session for distributing error correction coded data; and
performing routing priority control for the transmission path, and/or power control for a wireless transmission path for each of at least one selected session.

76. The program of claim 50, claim 74 or claim 75 that causes said computer to execute:
a step of notifying of the type of said error correction coded data, and/or coding setting for generating said error correction coded data.

77. The program of any one of the claims 19, 20, 69 or 72 that causes said computer to execute:
a step of transmitting at least one distribution session by multicast or broadcast.

78. A program that causes a computer that constitutes an image data reception device that receives data from an image data distribution device to execute the steps of:
receiving at least one coded image data that is distributed from said image data distribution device;
selecting whether or not to receive at least one coded image data based on at least one of the error/loss ratio of the received data, usable power and a predetermined setting;
selecting data from among properly received coded data based on the image quality; and
decoding said selected data.

79. The program of claim 23 or claim 78 that causes said computer to execute the steps of:
receiving at least one error correction coded data that is distributed from said image data distribution device; and
restoring data using error correction coded data when there is error/loss in the received data.

80. The program of claim 23 or claim 78 that causes said computer to execute the steps of:
receiving at least one error correction coded data that is distributed from said image data distribution device;
restoring data using error correction coded data when there is error/loss in the received data; and
selecting whether or not to receive at lease one error correction coded data based on at least one of the error/loss ratio of the received data, usable power and a predetermined setting.

81. The program of claim 79 or claim 80 that causes said computer to execute:
a step of selecting the optimum error correction coded data for restoring errors or loss according to the reception conditions of the received data when said plurality of error correction coded data is received.

82. The image data distribution system of any one of the claims 24, 25 or 29 wherein said plurality of coded image data for the same image is distributed with a time difference.

83. The image data distribution system of claim 24, 25 or 29 wherein
said image data distribution device notifies said image data reception device of at least one of:
(A1) type of said coded image data, and/or image quality of said coded image data;
(A2) type of said image frame and/or image block; and
(A3) said time difference.

84. The image data distribution system of any one of the claims 24 to 31, claim 82 or claim 83 further comprising:
means for selecting, by said image data distribution device, a session that distributes error correction coded data; and
means for distributing error correction coded data in the selected session.

85. The image data distribution system of any one of the claims 24 to 31, claim 82 or claim 83 further comprising:
means for selecting, by said image data distribution device, a session that distributes error correction coded data; and
means for performing routing priority control of the transmission path, and/or power control for a wireless transmission path for each of at least one selected session.

86. The image data distribution system of claim 84 or claim 85 wherein said image data distribution device notifies said image data reception device of the type of said error correction coded data, and/or coding setting for generating said error correction coded data.

87. The image data distribution system of any one of the claims 24 to 31, claim 82 or claim 83 wherein said image data reception device further comprises means for selecting whether or not to receive at least one session based on at least one of the error/lost ratio of the received data, usable power and a predetermined setting.

88. The image data distribution system of any one of claims 24 to 31 and claim 87 wherein said image data reception device further comprises:
means for receiving at least one error correction coded data that is distributed for said image data distribution device; and
means for restoring data using error correction coded data when there is error/loss in the received data.

89. The image data distribution system of any one of claims 24 to 31 and claim 87 wherein said image data reception device further comprises:
means for receiving at least one error correction coded data that is distributed from said image data distribution device;
means for restoring data using error correction coded data when there is error/loss in the received data; and
means for selecting whether or not to receive at least one session based on at least one of the error/lost ratio of the received data, usable power and a predetermined setting.

90. The image data distribution system of any one of the claims 24 to 31, claim 82 or claim 87 comprising means for controlling distributions such that at least one of said distribution sessions is transmitted by multicast or broadcast.

91. The image data distribution system of claim 25 or claim 29 wherein in said image data reception device said means for reconstructing said coded data selects intra-macro-block coded data by a specified method.

92. An image data distribution device comprising:
means for selecting sessions for distributing a plurality of coded image data for the same image having different image quality, based on the image quality; and
means for distributing said coded image data in the selected sessions.

93. An image data distribution system comprising:
an image data distribution device that distributes image data; and
at least one image data reception device that receives image data that is distributed from said image data distribution device; wherein
said image data distribution device comprises:
coded image data transmission means for transmitting a plurality of coded image data; and
means for selecting a session for distributing coded image data;
provided that two of said coded image data are transmitted from at least two of said coded image data transmission means such that there is a time difference; and
two of said coded image data, which are transmitted from at least two of said coded image data transmission means have different image quality from each other or have the same image quality; and
said image data reception device comprises:
a plurality of coded image data reception means for receiving a plurality of coded image data distributed from said image data distribution device;
means for reconstructing coded data from said received coded image data; and
means for decoding the reconstructed data; provided that
said image data reception device, according to the usable power or reception environment, receives all coded image data by said plurality of coded image data reception means, or stops control for receiving coded image data by at least one of said coded image data reception means.

94. An image data distribution system comprising:
an image data distribution device that distributes image data and error correction coded data for that image data; and
at least one image data reception device that receives image data and error correction coded data that are distributed from said image data distribution device; wherein
said image data distribution device comprises:
a plurality of coded image data transmission means of transmitting coded image data;
means for selecting a session for distributing coded image data;
at least one transmission means for transmitting error correction coded data for coded image data; and
means for selecting a session for distributing error correction coded data; provided that
two of said coded image data are transmitted from at least two of said coded image data transmission means such that there is a time difference; and
two of said coded image data, which are transmitted from at least two of said coded image data transmission means have different image quality from each other or have the same image quality; and
said image data reception device comprises:
a plurality of coded image data reception means for receiving coded image data that is distributed from said image data transmission means;
reception means for receiving error correction coded data that is distributed from said image data distribution device;
means for restoring data using said received error correction coded data when there is error or loss in said received coded image data;
means for reconstructing coded data from said received coded image data and restored coded image data; and
means for decoding said reconstructed data; provided that
said image data reception device, according to the usable power or reception environment, receives all coded image data by said plurality of coded image data reception means, and receives all error correction coded data by at least one of said error correction coded data reception means, or stops control for receiving coded image data by at least one of said coded image data reception means, and/or error correction coded data by at least one of said error correction coded data reception means.

95. The image data distribution system of claim 93 or 94 wherein said image data reception device can freely set the number of coded image data to be received.

96. The image data distribution system of claim 93 or 94 wherein at least one of the sessions for distributing the plurality of coded image data from said plurality of coded image data transmission means is transmitted by either unicast, multicast or broadcast.

97. The image data distribution device of any one of the claims 1 to 4, and claims 32 to 38 wherein at least one of said distribution sessions is transmitted by unicast, multicast or broadcast.

98. The image data distribution system of any one of the claims 7 to 11, and claims 44 to 49 wherein at least one of said distribution sessions is transmitted by unicast, multicast or broadcast.

99. The image data distribution control method of any one of the claims 13 to 18, and claims 56 to 62 wherein at least one of said distribution sessions is transmitted by unicast, multicast or broadcast.

100. The program of any one of the claims 19, 20, or claims 69 to 75 that causes said computer to execute a step of transmitting at least one of said distribution sessions by unicast, multicast or broadcast.
